# EUROPEAN PATENT SPECIFICATION

(11) **EP 4 068 796 B1**
(45) Date of publication and mention of the grant of the patent: **06.09.2023**
(21) Application number: 20905281.0
(22) Date of filing: 17.12.2020
(51) Int. Cl.: H04Q 1/04, G01D 5/00

(54) **NETWORK DEVICE**
NETZWERKVORRICHTUNG
DISPOSITIF DE RÉSEAU

(30) Priority: 28.12.2019 CN 201911403247
(43) Date of publication of application: 05.10.2022
(73) Proprietor: GUANGDONG OPPO MOBILE TELECOMMUNICATIONS CORP., LTD., Dongguan, Guangdong 523860 (CN)
(72) Inventor: ZHANG, Wei, Dongguan, Guangdong 523860 (CN)
(74) Representative: Ipside
(86) International application number: PCT/CN2020/137312
(87) International publication number: WO 2021/129516

(56) References cited:
- CN-A- 102 686 980
- CN-A- 102 686 980
- CN-A- 105 556 253
- CN-A- 107 270 887
- CN-A- 107 346 696
- CN-A- 107 797 488
- CN-A- 107 797 488
- CN-A- 108 958 364
- CN-A- 110 567 424
- US-A1- 2005 258 825
- US-A1- 2019 103 075

## Description

### TECHNICAL FIELD

The present disclosure relates to the field of communication technologies, and in particular to a network device.

### BACKGROUND

Customer premises equipment (CPE) is a wireless broadband access network equipment. CPE usually converts a network signal sent by a base station into a wireless fidelity (Wi-Fi) signal. Since CPE can receive the network signal as a wireless network signal, it can save the cost of laying wired network. Therefore, CPE may be used in a large number of rural areas, towns, hospitals, factories, communities and other places where wired networks are not installed. The fifth-generation mobile network (5G) is favored by users because of its high communication speed. For example, 5G mobile communications can transmit data hundreds of times faster than 4G mobile communications. 5G modules, such as millimeter wave signal modules, are the main means of implementing 5G mobile communications. However, when millimeter wave antennas are used in network devices, they are susceptible to object occlusion resulting in a weaker received signal, which in turn makes the communication of the network devices less effective.

### SUMMARY OF THE DISCLOSURE

The present disclosure provides a network device as set out in the appended set of claims.

### BRIEF DESCRIPTION OF THE DRAWINGS

In order to explain the technical solutions of the embodiments of the present disclosure more clearly, the following briefly introduces the accompanying drawings required for the description of the embodiments or the prior art. Obviously, the drawings in the following description are only some embodiments of the present disclosure. For those skilled in the art, other drawings can also be obtained from these drawings without creative work.
FIG. 1 is a schematic view of an application environment of a network device according to an embodiment of the present disclosure.
FIG. 2 is a structural schematic view of a network device according to an embodiment of the present disclosure.
FIG. 3 is a structural schematic view of a network device, with a housing removed, according to an embodiment of the present disclosure.
FIG. 4 is a circuit block view of a network device according to another embodiment of the present disclosure.
FIG. 5 is a structural schematic view of some components of a network device according to further another embodiment of the present disclosure.
FIG. 6 is a structural schematic view of a driver according to an embodiment of the present disclosure.
FIG. 7 is a three-dimensional structural schematic view of a driver according to an embodiment of the present disclosure.
FIG. 8 is an exploded schematic view of a driver according to an embodiment of the present disclosure.
FIG. 9 is a structural schematic view of a reducer according to another embodiment of the present disclosure.
FIG. 10 is a structural schematic view of a reducer according to further another embodiment of the present disclosure.
FIG. 11 is a circuit block view of a position detector of a network device according to further another embodiment of the present disclosure.
FIG. 12 is a schematic view of a base and related structures of a network device according to further another embodiment of the present disclosure.
FIG. 13 is a top view of FIG. 12.
FIG. 14 is a cross-sectional view taken along a line A-A in FIG. 13.
FIG. 15 is a three-dimensional structural schematic view of a driver according to further another embodiment of the present disclosure.
FIG. 16 is an exploded schematic view of a driver according to further another embodiment of the present disclosure.
FIG. 17 is a schematic view of a relationship between a magnetic element, a Hall sensor, and a drive shaft according to an embodiment of the present disclosure.
FIG. 18 is an exploded schematic view of a driver according to further another embodiment of the present disclosure.
FIG. 19 is a schematic view of a relationship between a connecting plate and a magnetic element according to an embodiment of the present disclosure.
FIG. 20 is an exploded schematic view of a driver according to further another embodiment of the present disclosure.
FIG. 21 is a structural schematic view of an auxiliary shaft according to an embodiment of the present disclosure.
FIG. 22 is a circuit block view of a network device according to an embodiment of the present disclosure.
FIG. 23 is a three-dimensional structural schematic view of a network device according to further another embodiment of the present disclosure.
FIG. 24 is an exploded schematic view of the network device shown in FIG. 23.
FIG. 25 is a structural schematic view of a bracket according to an embodiment of the present disclosure.
FIG. 26 is a structural schematic view of a network device according to further another embodiment of the present disclosure.
FIG. 27 is a top view of FIG. 26.
FIG. 28 is a structural schematic view of a network device according to further another embodiment of the present disclosure.
FIG. 29 is a structural schematic view of a network device, with a housing removed, according to further another embodiment of the present disclosure.
FIG. 30 is a circuit block view of a network device according to further another embodiment of the present disclosure.
FIG. 31 is a structural schematic view of a network device according to further another embodiment of the present disclosure.
FIG. 32 is a circuit block view of a network device according to further another embodiment of the present disclosure.
FIG. 33 is a structural schematic view of a network device according to further another embodiment of the present disclosure.
FIG. 34 is a structural schematic view of the network device, with a housing removed, shown in FIG. 33.
FIG. 35 is a circuit block view of a network device according to further another embodiment of the present disclosure.
FIG. 36 is a comparison table between a position of a network device and a corresponding direction where the first network signal is strongest.

### DETAILED DESCRIPTION

The present disclosure provides a network device, comprising a base, a bracket, a functional component, a position detector, and a main controller; wherein the bracket is rotatably connected to the base, the functional component is carried on the bracket, and the functional component is rotatable along with the bracket; the position detector comprises a Hall sensor and a magnetic element, one of the Hall sensor and the magnetic element being fixed to the base, the other of the Hall sensor and the magnetic element being fixed to the bracket and rotatable along with the bracket, and a distance between the Hall sensor and the magnetic element remaining unchanged in a direction perpendicular to a rotation plane of the bracket; the Hall sensor is disposed within a range of a magnetic field of the magnetic element; when the Hall sensor rotates relative to the magnetic element, the Hall sensor senses a change in the magnetic field of the magnetic element and outputs a detection signal; the main controller is configured to determine a position of the functional component relative to the base according to the detection signal. An example of a Hall sensor used to sense a change in a magnetic field, for position detection, is disclosed by the document CN107797488, Vivo comm Technology, published on 13 March 2018.

In some embodiments, the base defines an accommodating space and a through hole communicated with the accommodating space; the base is made of an electromagnetic shielding material; the network device further comprises a driver configured to drive the bracket to rotate relative to the base, the drive comprising a drive shaft; an end of the drive shaft is received in the accommodating space through the through hole, the other end of the drive shaft is fixedly connected to the bracket; the drive shaft is rotatably connected to the base; the bracket is configured to carrying the functional component, the one of the Hall sensor and the magnetic element being fixed in the accommodating space of the base, and the other of the Hall sensor and the magnetic element being fixed to the end of the drive shaft received in the accommodating space.

In some embodiments, the other of the Hall sensor and the magnetic element is fixed to an end surface of the drive shaft away from the bracket.

In some embodiments, an orthographic projection of a center of the magnetic element on a plane where the Hall sensor is located falls on a center of a region where the Hall sensor is located.

In some embodiments, the network device further comprises a circuit board, and the circuit board is received in the accommodating space and fixed to the base; the circuit board is arranged with the main controller, the main controller is electrically connected to the Hall sensor, and the magnetic element is fixed to the end of the drive shaft received in the accommodating space; the magnetic element and the Hall sensor are spaced apart from each other.

In some embodiments, the magnetic element is arranged on a side of the Hall sensor away from the circuit board, and the drive shaft is arranged on a side of the magnetic element away from the Hall sensor.

In some embodiments, the Hall sensor comprises a surface facing away from the circuit board and a side surface connected to the surface; the magnetic element is disposed adjacent to the side surface, and the drive shaft is disposed on a side of the magnetic element facing away from the side surface.

In some embodiments, the driver further comprises a connecting plate fixed to the drive shaft, and the other of the Hall sensor and the magnetic element is fixed to the drive shaft through the connecting plate.

In some embodiments, the connecting plate is sleeved on the drive shaft, the Hall sensor is fixed in the accommodating space of the base, and the magnetic element is fixed to the connecting plate; the magnetic element comprises at least one magnetic unit, and in condition of the number of the at least one magnetic unit being more than one, a center of the at least one magnetic unit as a whole is located on the drive shaft.

In some embodiments, the Hall sensor is fixed in the accommodating space of the base, and the magnetic element is fixed to the drive shaft; The driver further comprises an auxiliary shaft connected to the drive shaft; the auxiliary shaft is arranged with another magnetic element, and a distance between the magnetic element arranged on the auxiliary shaft and the Hall sensor remains unchanged when the drive shaft rotates.

In some embodiments, the driver further comprises a drive motor and a reducer, the drive motor being fixed to the base and rotatable under a control of a control signal submitted by the main controller; a step angle of the drive motor is a first angle; the reducer is engaged with an output shaft of the drive motor and is rotatably connected to the bracket; the reducer is configured to convert the first angle into a second angle, wherein the second angle is less than the first angle.

In some embodiments, the network device further comprises a driver and a drive controller; wherein the main controller is configured to send a first control signal; the drive controller is configured to receive the first control signal and drive the driver to rotate according to the first control signal, thereby driving the bracket to rotate; the Hall sensor is configured to sense a rotation angle of the driver in response to the first control signal to obtain a detection angle; the main controller is further configured to compare the detection angle with a target angle, and to send a second control signal in response to the detection angle being greater or less than the target angle; the drive controller is further configured to receive the second control signal and drive the driver to rotate according to the second control signal; the main controller is further configured to control the driver to stop in response to determining that the rotation angle of the driver being equal to the target angle.

In some embodiments, a step angle when the drive controller drives the driver to rotate according to the first control signal is a first step angle, and a step angle when the drive controller drives the driver to rotate according to the second control signa is a second step angle, the first step angle being greater than the second step angle.

The present disclosure further provides a network device, comprising a base, a bracket, a driver, a first signal receiving antenna, a position detector, a signal conversion device, and a main controller, the bracket being rotatably connected to the base, the driver being configured to drive the bracket to rotate relative to the base, and the first signal receiving antenna being fixedly arranged on the bracket and rotatable along with the bracket to receive a first network signal from each of various directions; the position detector is configured to detect a position of the bracket relative to the base and comprises a Hall sensor and a magnetic element, one of the Hall sensor and the magnetic element being fixed to the base, the other of the Hall sensor and the magnetic element being fixed to the bracket and rotatable along with the bracket, and a distance between the Hall sensor and the magnetic element remaining unchanged in a direction perpendicular to a rotation plane of the bracket; the Hall sensor is disposed within a range of a magnetic field of the magnetic element; the main controller is configured to send a control signal according to a current position of the bracket relative to the base and a position where the first network signal is strongest; the drive is configured to drive the bracket to rotate relative to the base under a control of the control signal, and driving the first signal receiving antenna to rotate to a direction where the first network signal is strongest; the signal conversion device is configured to convert the first network signal being strongest to a second network signal.

In some embodiments, the base defines an accommodating space and a through hole communicated with the accommodating space; the base is made of an electromagnetic shielding material; the accommodating space is configured to receive the Hall sensor; the drive comprises a drive motor, a drive gear, and a drive shaft, the drive motor being configured to drive the drive gear to rotate, the drive shaft being fixed to the drive gear and rotatable along with the drive gear, and the drive shaft passing through the through hole; an end of the drive shaft received in the accommodating space is configured to fix the magnetic element, and the other end of the drive shaft outside the accommodating space is configured to fix the bracket.

In some embodiments, the network device further comprises a circuit board, and the circuit board is received in the accommodating space and fixed to the base; the circuit board is electrically connected to the Hall sensor.

In some embodiments, the Hall sensor is arranged directly facing a center of the magnetic element.

In some embodiments, the driver further comprises a connecting plate sleeved on and fixed to the drive shaft, and the magnetic element comprises a plurality of magnetic units, and the magnetic units are arranged on the connecting plate and around the drive shaft.

In some embodiments, the network device further comprises a plurality of antenna groups distributed around a periphery of the network device, each antenna group comprising two second signal receiving antennas each configured to receive a third network signal; wherein the signal conversion device is further configured to convert the third network signal to a fourth network signal; all the second signal receiving antennas are distributed around the periphery of the network device.

In some embodiments, a polarization direction of one of the two second signal receiving antennas in a corresponding antenna group is a first polarization direction, and a polarization direction of the other of the two second signal receiving antennas in the corresponding antenna group is a second polarization direction, the first polarization direction being a +45° polarization direction and the second polarization direction being a -45° polarization direction.

In some embodiments, the network device further comprises a driver and a drive controller; wherein the main controller is configured to send a first control signal; the drive controller is configured to receive the first control signal and drive the driver to rotate according to the first control signal, thereby driving the bracket to rotate; the Hall sensor is configured to sense a rotation angle of the driver in response to the first control signal to obtain a detection angle; the main controller is further configured to compare the detection angle with a target angle, and to send a second control signal in response to the detection angle being greater or less than the target angle; the drive controller is further configured to receive the second control signal and drive the driver to rotate according to the second control signal; the main controller is further configured to control the driver to stop in response to determining that the rotation angle of the driver being equal to the target angle.

In some embodiments, a step angle when the drive controller drives the driver to rotate according to the first control signal is a first step angle, and a step angle when the drive controller drives the driver to rotate according to the second control signa is a second step angle, the first step angle being greater than the second step angle.

The technical solutions in the embodiments of the present disclosure will be clearly and completely described below with reference to the drawings in the embodiments of the present disclosure. Obviously, the described embodiments are only a part of the embodiments of the present disclosure, but not all of the embodiments. Based on the embodiments in the present disclosure, all other embodiments obtained by those skilled in the art without creative efforts shall fall within the scope of the present disclosure.

References herein to "embodiments" mean that a particular feature, structure, or characteristic described in conjunction with an embodiment may be included in at least one embodiment of the present disclosure. The presence of the phrase at various points in the specification does not necessarily mean the same embodiment, nor is it a separate or alternative embodiment that is mutually exclusive with other embodiments. It is understood, both explicitly and implicitly, by those skilled in the art that the embodiments described herein may be combined with other embodiments.

The terms "first", "second", etc. in the specification and claims of the present disclosure and the accompanying drawings above are intended to distinguish between different objects and are not intended to describe a particular order. In addition, the terms "including" and "having", and any variations thereof, are intended to cover non-exclusive inclusion. For example, a process, method, system, product or apparatus including a series of steps or units is not limited to the listed steps or units, but optionally also includes steps or units that are not listed, or optionally also includes other steps or units that are inherent to the process, method, product or apparatus.

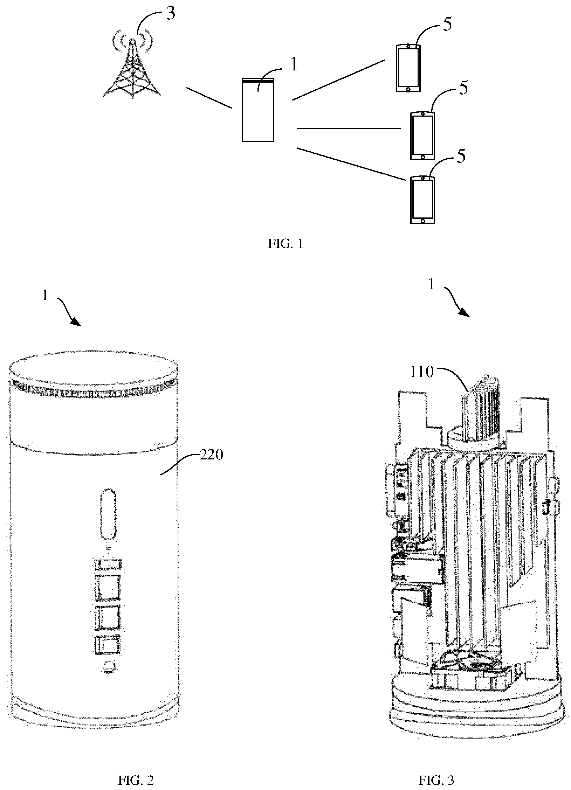

Referring to FIG. 1, FIG. 1 is a schematic view of an application environment of a network device according to an embodiment of the present disclosure. A network device 1 is a customer premises equipment (CPE). The network device 1 communicates with a base station 3, receives a first network signal sent by the base station 3, and converts the first network signal into a second network signal. The second network signal may be used by a terminal device 5 such as tablet computer, smart phone, and notebook computer. The first network signal may be, but not limited to, a fifth-generation mobile network (5G) signal, and the second network signal may be, but not limited to, a wireless fidelity (Wi-Fi) signal. The CPE can be widely used in rural areas, towns, hospitals, factories, communities, etc. The first network signal that CPE can access may be a wireless network signal, which may save the cost of laying a wired network.

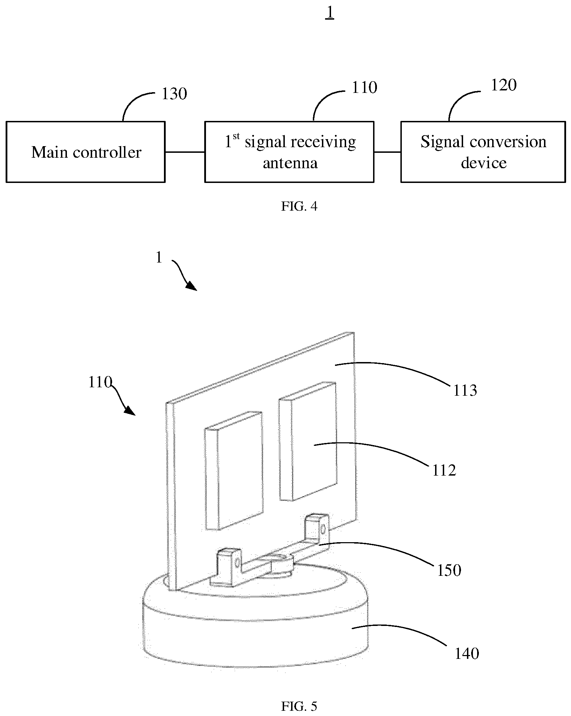

Referring to FIG. 2, FIG. 3, and FIG. 4 together, FIG. 2 is a structural schematic view of a network device according to an embodiment of the present disclosure, FIG. 3 is a structural schematic view of a network device, with a housing removed, according to an embodiment of the present disclosure, and FIG. 4 is a circuit block view of a network device according to another embodiment of the present disclosure. The network device 1 includes a housing 220. The shape of the housing 220 may be a multi-faceted cylindrical tube or a cylindrical tube. The material of the housing 220 may be, but is not limited to, an insulating material such as plastic. Understandably, in other implementation manners, the network device 1 may not include the housing 220.

The network device 1 further includes a first signal receiving antenna 110 and a signal conversion device 120. The first signal receiving antenna 110 may be rotated to receive the first network signal from different directions, and the signal conversion device 120 may convert the first network signal with a strongest signal intensity among the first network signals received by the first signal receiving antenna 110 from different directions into the second network signal.

In a case that the network device 1 includes the housing 220, the first signal receiving antenna 110 and the signal conversion device 120 may be disposed in the housing 220.

The first signal receiving antenna 110 may be, but not limited to, a millimeter wave signal receiving antenna or a terahertz signal receiving antenna. Correspondingly, the first network signal may be, but is not limited to, a millimeter wave signal or a terahertz signal. At present, in the 5th generation wireless systems, according to the 3GPP TS 38.101 agreement, the new radio (NR) is mainly adopted with two frequency bands: FR1 frequency band and FR2 frequency band. Among them, the frequency range of the FR1 frequency band is 450MHz - 6GHz, also called "sub-6GHz" frequency band; the frequency range of the FR2 frequency band is 24.25GHz - 52.6GHz, which belongs to the millimeter wave frequency band. 3GPP Release 15 standardizes the current 5G millimeter wave frequency bands including: n257 (26.5-29.5GHz), n258 (24.25-27.5GHz), n261 (27.5-28.35GHz), and n260 (37-40GHz). The millimeter wave or terahertz signal has the advantages of fast transmission speed. However, the millimeter wave or terahertz signal is easily blocked by external objects. When there is an object obstructing the first signal receiving antenna 110 and the base station 3, the signal intensity of the first network signal received by the first signal receiving antenna 110 is relatively weak. In this case, if the first network signal with weaker signal intensity is converted to the second network signal, it may result in the obtained second network signal with weaker signal intensity as well.

For the network device 1 placed in a certain position, the signal intensity of the first network signal in each direction of the first signal receiving antenna 110 is different. The first signal receiving antenna 110 in the network device 1 provided in the embodiments is rotatable. When the first signal receiving antenna 110 is rotated to a direction where the signal intensity of the first network signal is strongest, the first signal receiving antenna 110 stays in the direction where the signal intensity of the first network signal is the strongest. The signal conversion device 120 converts the first network signal with the strongest signal intensity received by the first signal receiving antenna 110 into the second network signal. In the embodiments, the signal conversion device 120 in the network device 1 converts the first network signal with the strongest signal intensity into the second network signal, thereby ensuring the signal intensity of the second network signal and thus the communication quality when communicating using the second network signal.

In some embodiments, the first signal receiving antenna 110 may be rotated manually or automatically, as long as it is satisfied that the first signal receiving antenna 110 can be rotated. In the present disclosure, the first signal receiving antenna 110 may be automatically rotated as an example for introduction, and a component that drives the first signal receiving antenna 110 to automatically rotate will be described later.

In some embodiments, the network device 1 further includes a main controller 130. The main controller 130 is configured to determine a direction with the strongest signal intensity according to the signal intensity of the first network signal, and control the first signal receiving antenna 110 to rotate to the direction with the strongest first network signal.

Specifically, the main controller 130 is electrically connected to the first signal receiving antenna 110. When the first signal receiving antenna 110 rotates, the first signal receiving antenna 110 can receive the first network signals in various directions. The main controller 130 compares the intensity of the first network signal in each direction, and determines the direction with the strongest signal intensity. In the embodiments, the main controller 130 controls the first signal receiving antenna 110 to rotate to the direction where the signal intensity of the first network signal is strongest, which may realize the automatic control of the rotation of the first signal receiving antenna 110.

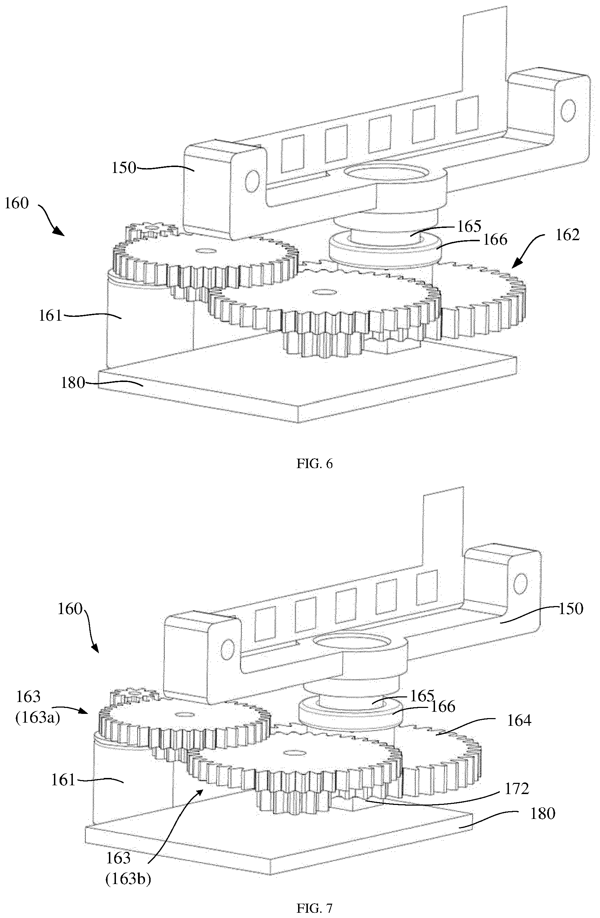

Referring to FIG. 5 and FIG. 6 together, FIG. 5 is a structural schematic view of some components of a network device according to further another embodiment of the present disclosure, and FIG. 6 is a structural schematic view of a driver according to an embodiment of the present disclosure. In FIG. 5, only components related to the first signal receiving antenna 110 and driving the first signal receiving antenna 110 in the network device 1 are illustrated, and other components in the network device 1 are ignored. The network device 1 further includes a base 140, a bracket 150, and a driver 160. The base 140 is rotatably connected with the bracket 150, and the first signal receiving antenna 110 is arranged on the bracket 150. The driver 160 is configured to receive a control signal of the main controller 130 and to drive the bracket 150 to rotate relative to the base 140 to the direction where the signal intensity of the first network signal is strongest under the control of the control signal.

The base 140 is fixed. For example, the base 140 may be directly or indirectly fixed to the housing 220 (shown in FIG. 2) of the network device 1. The bracket 150 is rotatably connected with the base 140. When the first signal receiving antenna 110 is disposed on the bracket 150, and when the driver 160 drives the bracket 150 to rotate, the bracket 150 drives the first signal receiving antenna 110 to rotate. The driver 160 may include, but is not limited to, a motor and the like. The base 140 forms a casing, and the driver 160 is disposed in the casing formed by the base 140.

The first signal receiving antenna 110 includes a plurality of receiving units 112 to form an antenna array. In the embodiments, the number of the receiving units 112 is two as an example for illustration. The receiving units 112 are disposed on a substrate 113. The substrate 113 may be, but is not limited to, a circuit board or the like.

In some embodiments, referring to FIG. 6, the driver 160 includes a drive motor 161 and a reducer 162. The drive motor 161 is fixed to the base 140 and is rotated under the control of the control signal. A step angle of the drive motor 161 is a first angle. The reducer 162 is engaged with an output shaft of the drive motor 161 and is rotatably connected to the bracket 150. The reducer 162 is configured to convert the first angle into a second angle. The second angle is less than the first angle.

The driver 160 further includes a drive shaft 165 and a drive gear 164. The drive shaft 165 is fixedly connected to the drive gear 164, and the drive shaft 165 is also fixedly connected to the bracket 150. When the drive gear 164 rotates, the drive shaft 165 rotates to drive the bracket 150 to rotate, and when the bracket 150 rotates, the first signal receiving antenna 110 arranged on the bracket 150 is driven to rotate.

Further, the driver 160 may further include a bearing 166 sleeved on the drive shaft 165, and the drive gear 164 is connected to the drive shaft 165 through the bearing 166.

The network device 1 may further include a circuit board 180. The signal conversion device 120 and the main controller 130 in the network device 1 are both arranged on the circuit board 180. The circuit board 180 may be also called a small board. Components that drive the first signal receiving antenna 110 to work are mainly arranged on the circuit board 180. For example, the circuit board 180 may further be arranged with a power supply circuit, a protection circuit, etc., to assist the signal conversion device 120 in converting the first network signal into the Wi-Fi signal.

The step angle refers to a mechanical angle that the output shaft of the drive motor 161 has rotated for one pulse of the control signal. The step angle of the drive motor 161 may be, but not limited to, 3°, 1.5°, 0.75°, 3.6°, or 1.8°. The greater the step angle, the greater the angle at which one pulse of the control signal causes the output shaft of the drive motor 161 to rotate, and the greater the angle at which the first signal receiving antenna 110 is driven to rotate; on the contrary, the less the step angle, the less the angle at which one pulse of the control signal causes the output shaft of the drive motor 161 to rotate, and the less the angle at which the first signal receiving antenna 110 is driven to rotate. When the step angle is greater, the angle at which one pulse of the control signal causes the output shaft of the drive motor 161 to rotate is greater, and less pulses are required for the output shaft of the drive motor 161 to rotate one revolution; on the contrary, when the step angle is less, the angle at which one pulse of the control signal causes the output shaft of the drive motor 161 to rotate is less, and more pulses are required for the output shaft of the drive motor 161 to rotate one revolution. For example, for the drive motor 161 with a step angle of 1.8°, the number of pulses required for one revolution is 360/1.8=200. Generally, the step angle of the drive motor 161 is relatively large. If the reducer 162 is not applied and the drive motor 161 is directly applied to drive the bracket 150, the angle of each rotation of the bracket 150 is relatively large, and the first signal receiving antenna 110 arranged on the bracket 150 rotates at a greater angle each time, which in turn results in a less number of first network signals received by the first signal receiving antenna 110 during one revolution, leading to an inaccurate subsequent determination of the first network signal with the strongest signal intensity according to the signal intensity of each collected first network signal. For example, when the step angle of the drive motor 161 is the first angle and the reducer 162 is not applied, one pulse of the control signal causes the bracket 150 to rotate from position A to position B, and the direction of the first network signal with the strongest signal intensity is at position C between position A and position B, then because the step angle is too large, the drive motor 161 cannot drive the first signal receiving antenna 110 to rotate to position C, which makes the determination of the first network signal with the strongest signal intensity according to the signal intensity of each first network signal inaccurate.

The network device 1 of the present disclosure is arranged with a reducer 162 to convert the first angle into the second angle less than the first angle. When the drive motor 161 drives the bracket 150 through the reducer 162, it allows for a higher number of rotations for one revolution of the bracket 150. In other words, compared to the network device 1 not arranged with the reducer 162, the use of the reducer 162 in the embodiments may enable the first signal receiving antenna 110 to receive first network signals in more directions, thereby improving the accuracy when determining the first network signal with the strongest signal intensity according to the signal intensity of each collected first network signal.

In some embodiments, the reducer 162 includes a P-stage gear set 163, and the driver 160 further includes a drive gear 164. Each gear set 163 includes a first gear 1631 and a second gear 1632 that are coaxially and fixedly connected. The radius of the first gear 1631 in the gear set 163 of each stage is greater than the radius of the second gear 1632 in the gear set 163 of the same stage. The first gear 1631 in a first-stage gear set 163 in the P-stage gear set 163 is engaged with the output shaft of the motor, and the second gear 1632 in the first-stage gear set 163 is engaged with the first gear 1631 in a second-stage gear set 163. The first gear 1631 in a Q-th level gear set 163 is engaged with the second gear 1632 in a (Q-1)-th level gear set 163, and the second gear 1632 in the Q-th level gear set 163 is engaged with the first gear 1631 in a (Q+1)-th level gear set 163. The second gear 1632 in a P-th gear set 163 is engaged with the drive gear 164, and the drive gear 164 is fixedly connected to the bracket 150. Q and P are both positive integers, and Q is greater than 1 and Q is less than P. The radius of the first gear 1631 in the Q-th gear set 163 is less than the radius of the first gear 1631 in the (Q+1)-th gear set 163. The radius of the first gear 1631 in the P-th gear set 163 is less than the radius of the drive gear 164.

In the embodiments, the reducer 162 includes a two-stage gear set 163 as an example for illustration. Understandably, the reducer 162 may include a one-stage gear set 163, a two-stage gear set 163, a three-stage gear set 163, or even a higher-stage gear set 163.

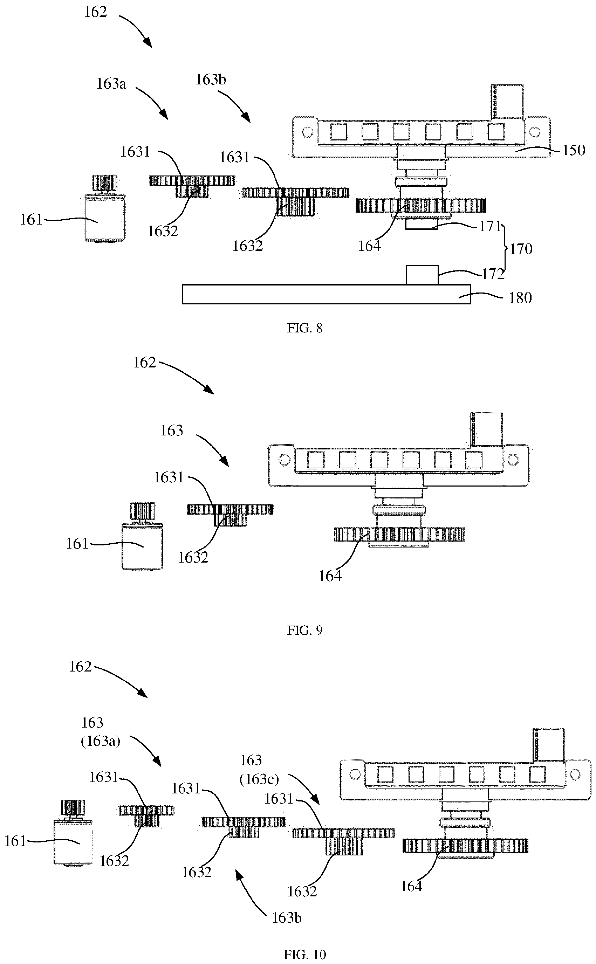

Referring to FIGS. 7 and 8 together. FIG. 7 is a three-dimensional structural schematic view of a driver according to an embodiment of the present disclosure, and FIG. 8 is an exploded schematic view of a driver according to an embodiment of the present disclosure. In the embodiments, the reducer 162 includes a two-stage gear set 163. Each gear set 163 includes a first gear 1631 and a second gear 1632 that are coaxially and fixedly connected. The radius of the first gear 1631 in the gear set 163 of each stage is greater than the radius of the second gear 1632 in the gear set 163 of the same stage. For the purpose of description, the two-stage gear set is respectively named a first-stage gear set 163a and a second-stage gear set 163b. The first gear 1631 in the first-stage gear set 163a is engaged with the output shaft of the drive motor 161, and the second gear 1632 in the first-stage gear set 163a is engaged with the first gear 1631 in the second-stage gear set 163b. The second gear 1632 in the second-stage gear set 163b is engaged with the drive gear 164. The radius of the first gear 1631 in the first gear set 163a is less than the radius of the first gear 1631 in the second gear set 163, and the radius of the first gear 1631 in the second gear set 163b is less than the radius of the drive gear 164.

Referring to FIG. 9, FIG. 9 is a structural schematic view of a reducer according to another embodiment of the present disclosure. In the embodiments, when the reducer 162 includes a one-stage gear set 163, the gear set 163 includes a first gear 1631 and a second gear 1632 that are coaxially and fixedly connected. The radius of the first gear 1631 is greater than the radius of the second gear 1632. The first gear 1631 is engaged with the output shaft of the drive motor 161, and the second gear 1632 is engaged with the drive gear 164.

Referring to FIG. 10, FIG. 10 is a structural schematic view of a reducer according to further another embodiment of the present disclosure. In the embodiments, when the reducer 162 includes a three-stage gear set 163, each stage of the gear set 163 includes a first gear 1631 and a second gear 1632 that are coaxially and fixedly connected. The radius of the first gear 1631 in the gear set 163 of each stage is greater than the radius of the second gear 1632 in the gear set 163 of the same stage. For the purpose of description, the three-stage gear set 163 is named a first-stage gear set 163a, a second-stage gear set 163b, and a third-stage gear set 163c, respectively. The first gear 1631 in the first-stage gear set 163a is engaged with the output shaft of the motor, and the second gear 1632 in the first-stage gear set 163a is engaged with the first gear 1631 in the second-stage gear set 163b. The second gear 1632 in the second gear set 163b is engaged with the first gear 1631 in the third-stage gear set 163c, and the second gear 1632 in the third gear set 163 is engaged with the drive gear 164. The drive gear 164 is fixedly connected to the bracket 150. The radius of the first gear 1631 in the first gear set 163a is less than the radius of the first gear 1631 in the second gear set 163b, the radius of the first gear 1631 in the second gear set 163b is less than the radius of the first gear 1631 in the third-stage gear set 163c, and the radius of the first gear 1631 in the third-stage gear set 163c is less than the radius of the drive gear 164.

When the number of the gear sets 163 is greater, the second angle is less, which is more conducive to the precise control of the rotation angle of the bracket 150 and to receiving the first network signal in more directions, thereby improving the accuracy when determining the first network signal with the strongest signal intensity according to the signal intensity of each collected first network signal. However, the more gear sets 163, the more time it takes to install the gear sets 163, and the larger the space occupied by the gear sets 163. Therefore, the accuracy of controlling the rotation angle of the bracket 150, the time taken to install the gear set 163, and the space occupied by the gear set 163 may be comprehensively considered for the number of rotating gear sets 163.

In the embodiments, the reducer 162 includes three gear sets 163. The drive motor 161 is fixed to the base 140, P=3, and the first gear 1631 in the first gear set 163 is arranged away from the base 140 compared to the second gear 1632 in the first gear set 163; the first gear 1631 in the second gear 1632 gear set 163 is arranged away from the base 140 compared to the second gear 1632 in the second gear set 163; the first gear 1631 in the third gear set 163 is arranged adjacent to the base 140 compared to the second gear 1632 in the third gear set 163. The arrangement of the gear set 163 in the embodiments may make the volume occupied by the gear set 163 less, thereby improving the integration degree of the reducer 162.

In the embodiments, the driver 160 drives the bracket 150 to rotate, thereby driving the first signal receiving antenna 110 to rotate in a first plane. In other embodiments, the driver 160 may drive the bracket 150 to rotate, thereby driving the first signal receiving antenna 110 to rotate in the first plane, and also drive the bracket 150 to drive the first signal receiving antenna 110 to rotate in a second plane, wherein the first plane is different from the second plane. For example, the first plane may be an XY plane, and the second plane may be a YZ plane.

When the driver 160 drives the bracket 150 to rotate to drive the first signal receiving antenna 110 to rotate in the first plane and the second plane, the first signal receiving antenna 110 can receive the first network signals in more directions, thereby further improving the accuracy when determining the first network signal with the strongest signal intensity according to the signal intensity of each collected first network signal.

Referring to FIG. 7, FIG. 8, and FIG. 11, FIG. 11 is a circuit block view of a position detector of a network device according to further another embodiment of the present disclosure. The network device 1 further includes a position detector 170 configured to detect a rotation angle of the bracket 150 relative to the base 140. The main controller 130 corrects the control signal according to the rotation angle of the bracket 150 relative to the base 140. The position detector 170 includes a magnetic element 171 and a Hall sensor 172.

The position detector 170 detecting the rotation angle of the bracket 150 relative to the base 140 will be described in detail below. Specifically, in combination with the structure of the network device 1 described above, the network device 1 includes a base 140, a bracket 150, a first signal receiving antenna 110, a position detector 170, and a main controller 130. The bracket 150 is rotatably connected to the base 140, functional components (including the first signal receiving antenna 110) are arranged on the bracket 150, and the first signal receiving antenna 110 rotates with the rotation of the bracket 150. The position detector 170 includes a magnetic element 171 and a Hall sensor 172. One of the Hall sensor 172 and the magnetic element 171 is fixed to the base 140, and the other of the Hall sensor 172 and the magnetic element 171 is fixed to the bracket 150 and rotates with the rotation of the bracket 150. The distance between the Hall sensor 172 and the magnetic element 171 remains unchanged in a direction perpendicular to a rotation plane of the rotation of the bracket 150. For example, when the bracket 150 rotates in the XY plane, then, in the Z-axis direction, the distance between the Hall sensor 172 and the magnetic element 171 remains unchanged. The Hall sensor 172 is located within a magnetic field range of the magnetic element 171. When the Hall sensor 172 rotates relative to the magnetic element 171, the Hall sensor 172 senses the change in the magnetic field of the magnetic element 171 and output a detection signal. The main controller 130 determines the position of the first signal receiving antenna 110 relative to the base 140 according to the detection signal.

The magnetic element 171 may be, but is not limited to, a magnet. It is understandable that in other implementation manners, the first signal receiving antenna 110 may also be other functional components, such as a camera, a flashlight, and the like. The manner in which the bracket 150 is rotatably connected to the base 140 in the network device 1 may be, but is not limited to, the manner described above, as long as the bracket 150 is rotatably connected to the base 140.

One of the Hall sensor 172 and the magnetic element 171 is fixed to the base 140, and the other of the Hall sensor 172 and the magnetic element 171 is fixed to the bracket 150 and rotates following the rotation of the bracket 150, which includes the following two situations: 1. The Hall sensor 172 is fixed to the base 140, and the magnetic element 171 is fixed to the bracket 150 and rotates with the rotation of the bracket 150; in the following embodiments, this method is taken as an example for illustration; 2. The magnetic element 171 is fixed to the base 140, and the Hall sensor 172 is fixed to the bracket 150 and rotates with the rotation of the bracket 150.

In the conventional technology, in order to measure the position change of the bracket 150 relative to the base 140, the distance between the Hall sensor 172 and the magnetic element 171 usually changes. When the distance between the Hall sensor 172 and the magnetic element 171 is short, the magnetic field intensity generated by the magnetic element 171 is greater; when the distance between the Hall sensor 172 and the magnetic element 171 is far, the magnetic field intensity generated by the magnetic element 171 is less. The Hall sensor 172 senses the magnitude of the magnetic field intensity generated by the magnetic element 171, and then the position change between the bracket 150 and the base 140 may be determined. However, the sensing accuracy when the Hall sensor 172 senses the change in the intensity of the magnetic field varies with the change in the distance between the Hall sensor 172 and the magnetic element 171. When the distance between the Hall sensor 172 and the magnetic element 171 is short, the sensing accuracy of the Hall sensor 172 is relatively large, that is, the Hall sensor 172 is more sensitive to changes in the distance between the Hall sensor 172 and the magnetic element 171; when the distance between the Hall sensor 172 and the magnetic element 171 is far, the sensing accuracy of the Hall sensor 172 is small, that is, the Hall sensor 172 is less sensitive to changes in the distance between the Hall sensor 172 and the magnetic element 171. It can be seen that, in the conventional technology, the measurement accuracy of using the Hall sensor 172 and the magnetic element 171 to measure the position change between the bracket 150 and the base 140 is not high.

In the embodiments, the bracket 150 can rotate relative to the base 140, and the first signal receiving antenna 110 arranged on the bracket 150 can therefore be driven to rotate, such that the first signal receiving antenna can receive various signals, which in turn provides the possibility to select a first network signal of better quality in order to improve the communication quality of the network device 1. In addition, the Hall sensor 172 rotates relative to the magnetic element 171, and the distance between the Hall sensor 172 and the magnetic element 171 remains unchanged in the direction perpendicular to the rotation plane of the rotation of the bracket 150. Therefore, the magnitude of the magnetic field intensity generated by the magnetic element 171, sensed by the Hall sensor 172, remains unchanged, and the Hall sensor 172 determines the position between the bracket 150 and the base 140 according to the sensed change in the direction of the magnetic field generated by the magnetic element 171, so as to avoid the technical defect that the measurement accuracy is not high when the position of the Hall sensor 172 is changed relative to the position of the magnetic element 171 in the direction perpendicular to the rotation plane of the rotation of the bracket 150, thereby improving the detection accuracy.

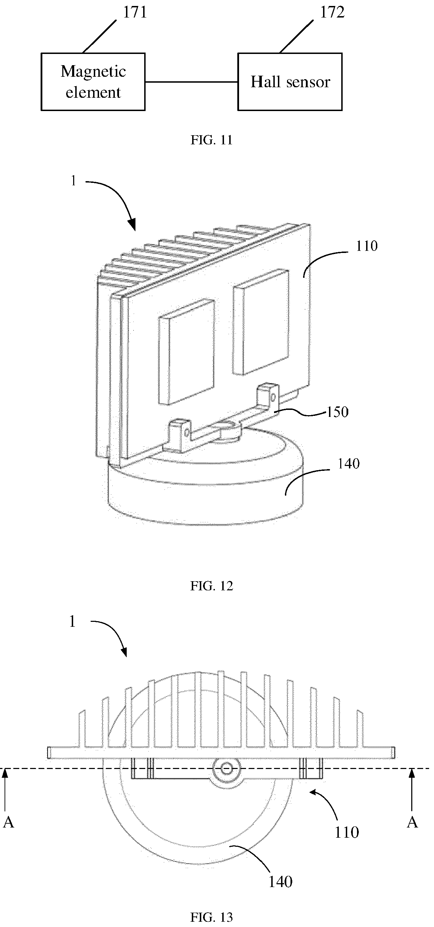

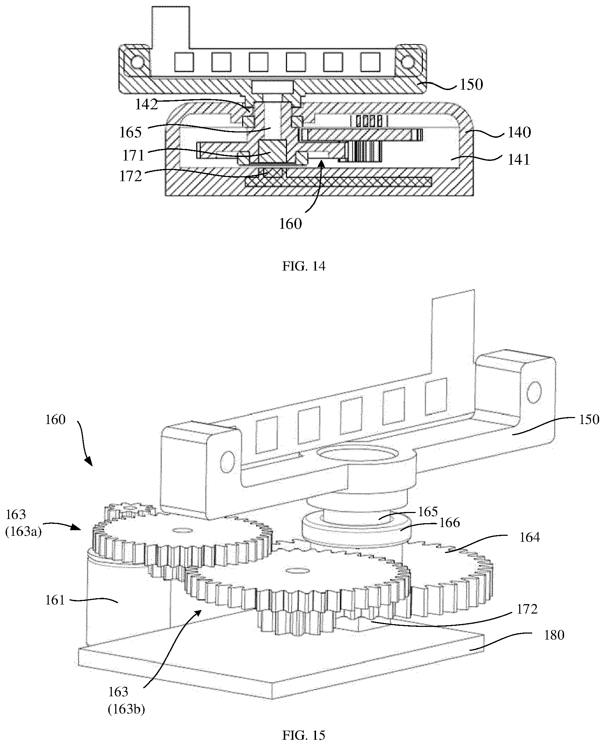

Referring to FIG. 12, FIG. 13 and FIG. 14, FIG. 12 is a schematic view of a base and related structures of a network device according to further another embodiment of the present disclosure, FIG. 13 is a top view of FIG. 12, and FIG. 14 is a cross-sectional view taken along a line A-A in FIG. 13. The base 140 defines an accommodating space 141 and a through hole 142 communicating with the accommodating space 141. The base 140 is made of electromagnetic shielding material. The network device 1 further includes a driver 160 for driving the bracket 150 to rotate relative to the base 140. The driver 160 includes a drive shaft 165, an end of the drive shaft 165 is received in the accommodating space 141 through the through hole 142, and the other end of the drive shaft 165 is fixedly connected to the bracket 150. The drive shaft 165 is rotatably connected to the base 140. The bracket 150 is configured to carry functional components. One of the Hall sensor 172 and the magnetic element 171 is fixed to the base 140 and is disposed in the accommodating space 141 of the base 140, and the other of the Hall sensor 172 and the magnetic element 171 is fixed to the end of the drive shaft 165 received in the accommodating space 141. In other words, in the embodiments, the other of the Hall sensor 172 and the magnetic element 171 is fixed to the bracket 150 through the drive shaft 165. In the embodiments, the Hall sensor 172 is fixed to the base 140 and disposed in the accommodating space 141 of the base 140, and the magnetic element 171 is fixed to the bracket 150 through the drive shaft 165, taken as an example for illustration.

In the embodiments, the base 140 is made of electromagnetic shielding material, which may prevent the interference of external electromagnetic wave signals on the Hall sensor 172 and the magnetic element 171 received in the base 140, further enhancing the accuracy of the Hall sensor 172 to measure the position change between the bracket 150 and the base 140.

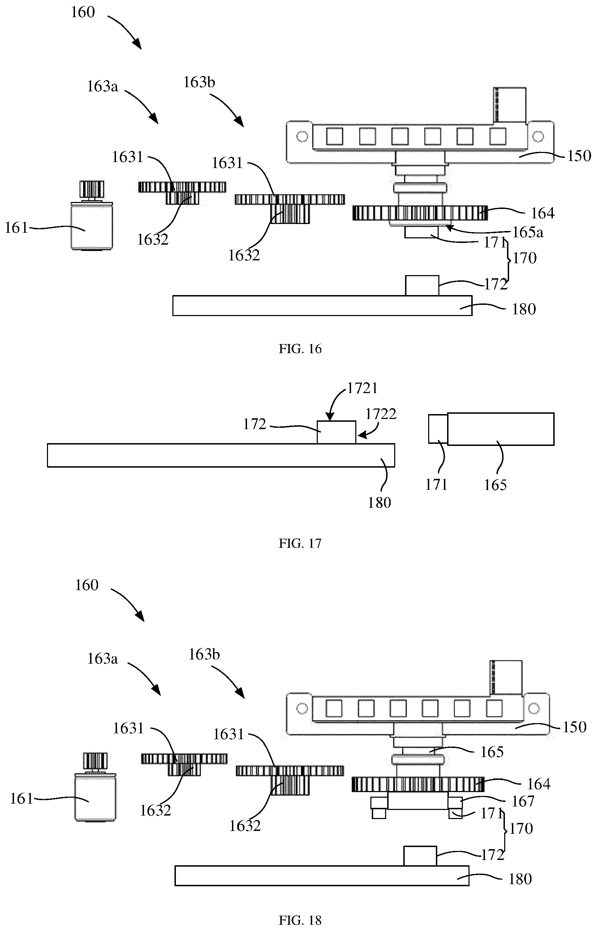

In some embodiments, referring to FIGS. 15 and 16 together, FIG. 15 is a three-dimensional structural schematic view of a driver according to further another embodiment of the present disclosure, and FIG. 16 is an exploded schematic view of a driver according to further another embodiment of the present disclosure. The other of the Hall sensor 172 and the magnetic element 171 is fixed to an end surface 165a of the drive shaft 165 away from the bracket 150. When the Hall sensor 172 is fixed to the base 140, the magnetic element 171 is fixed to the end surface 165a of the drive shaft 165 away from the bracket 150. When the magnetic element 171 is fixed to the base 140, the Hall sensor 172 is fixed to the end surface 165a of the drive shaft 165 away from the bracket 150. In the embodiments, the Hall sensor 172 is fixed to the base 140 through the circuit board 180, and the magnetic element 171 is fixed to the end surface 165a of the drive shaft 165 away from the bracket 150, taken as an example for illustration.

When the other of the Hall sensor 172 and the magnetic element 171 is fixed to the end surface 165a of the drive shaft 165 away from the bracket 150, the Hall sensor 172 or the magnetic element 171 fixed to the drive shaft 165 is closest to the magnetic element 171 or the Hall sensor 172 fixed to the base 140. In this case, the magnetic field intensity of the magnetic element 171 is relatively large, which may further enhance the accuracy of the Hall sensor 172 in measuring the change in position between the bracket 150 and the base 140.

In some embodiments, an orthographic projection of the center of the magnetic element 171 on a plane where the Hall sensor 172 is located falls on the center of a region where the Hall sensor 172 is located, which may further enhance the accuracy of the Hall sensor 172 in measuring the change in position between the bracket 150 and the base 140.

The network device 1 may further include a circuit board 180, and the circuit board 180 is received in the accommodating space 141 and fixed to the base 140. The circuit board 180 is arranged with the main controller 130, the main controller 130 is electrically connected to the Hall sensor 172, and the magnetic element 171 is fixed to the end of the drive shaft 165 received in the accommodating space 141. The magnetic element 171 and the Hall sensor 172 are spaced apart from each other. The circuit board 180 may be also called a small board. Components that drive the first signal receiving antenna 110 to work are mainly arranged on the circuit board 180. For example, the circuit board 180 may further be arranged with a power supply circuit, a protection circuit, etc., to assist the signal conversion device 120 in converting the first network signal into the Wi-Fi signal.

Because the Hall sensor 172 is required to be electrically connected to the main controller 130, the main controller 130 is arranged on the circuit board 180, and the main controller 130 and the Hall sensor 172 are electrically connected, such that the connection between the Hall sensor 172 and the main controller 130 may be simpler.

In some embodiments, the magnetic element 171 is arranged on a side of the Hall sensor 172 away from the circuit board 180, and the drive shaft 165 is arranged on a side of the magnetic element 171 away from the Hall sensor 172. In the embodiments, the magnetic element 171, the Hall sensor 172, and the drive shaft 165 are arranged in such a way that an axis of rotation of the drive shaft 165 when rotating is parallel or substantially parallel to a stacking direction of the circuit board 180, the magnetic element 171, and the Hall sensor 172. It can thus be seen that the magnetic element 171, the Hall sensor 172, and the drive shaft 165 may utilize the space in the Z-axis direction, which is conducive to reducing the size of the network device 1 in the XY plane.

Referring to FIG. 17 in conjunction with FIG. 12 to FIG. 14, FIG. 17 is a schematic view of a relationship between a magnetic element, a Hall sensor, and a drive shaft according to an embodiment of the present disclosure. In FIG. 17, only the positional relationship between the magnetic element, the Hall sensor and the drive shaft is shown, and other parts are omitted. The network device 1 further includes a circuit board 180, and the circuit board 180 is received in the accommodating space 141 and fixed to the base 140. The circuit board 180 is arranged with the main controller 130, the main controller 130 is electrically connected to the Hall sensor 172, and the magnetic element 171 is fixed to the drive shaft 165 and is received in the accommodating space 141 The magnetic element 171 and the Hall sensor 172 are spaced apart from each other. The circuit board 180 may be also called a small board. Components that drive the first signal receiving antenna 110 to work are mainly arranged on the circuit board 180. For example, the circuit board 180 may further be arranged with a power supply circuit, a protection circuit, etc., to assist the signal conversion device 120 in converting the first network signal into the Wi-Fi signal.

The Hall sensor 172 includes a surface 1721 facing away from the circuit board 180 and a side surface 1722 connected to the surface 1721. The magnetic element 171 is disposed adjacent to the side surface 1722, and the drive shaft 165 is disposed on a side of the magnetic element 171 facing away from the side surface 1722. In the embodiments, the stacking direction of the Hall sensor 172 and the circuit board 180 is a first direction, the stacking direction of the Hall sensor 172 and the magnetic element 171 is a second direction, and the first direction is perpendicular or substantially perpendicular to the second direction. The network device 1 in the embodiments may reduce the size in the Z-axis direction, which is beneficial to the miniaturization of the network device 1 in the Z-axis direction.

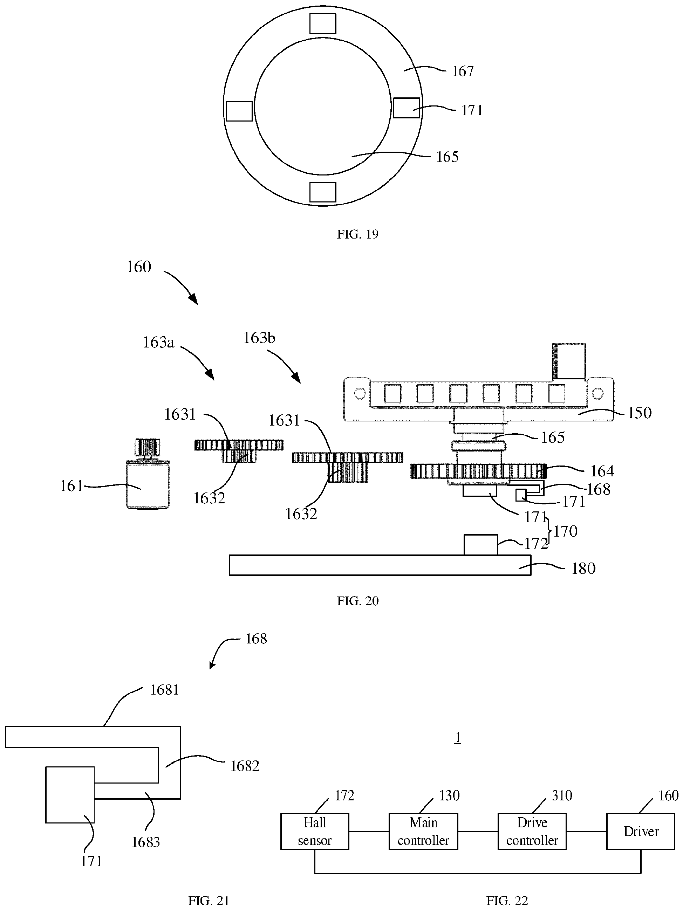

Referring to FIGS. 12 to 14, FIG. 18 and FIG. 19 together, FIG. 18 is an exploded schematic view of a driver according to further another embodiment of the present disclosure, and FIG. 19 is a schematic view of a relationship between a connecting plate and a magnetic element according to an embodiment of the present disclosure. In the embodiments, the driver 160 further includes a connecting plate 167, the connecting plate 167 is fixed to the drive shaft 165, and the other of the Hall sensor 172 and the magnetic element 171 is fixed to the drive shaft 165 through the connecting plate 167. In other words, in the embodiments, the other of the Hall sensor 172 and the magnetic element 171 is fixed to the bracket 150 through the connecting plate 167 and the drive shaft 165. Specifically, when the Hall sensor 172 is fixed to the base 140 directly or indirectly (through a circuit board or the like), the magnetic element 171 is fixed to the drive shaft 165 through the connecting plate 167. When the magnetic element 171 is fixed to the base 140 directly or indirectly (through a circuit board, etc.), the Hall sensor 172 is fixed to the drive shaft 165 through the connecting plate 167. In the schematic views of the embodiments, the magnetic element 171 is fixed to the drive shaft 165 through the connecting plate 167 as an example for illustration.

In some embodiments, the connecting plate 167 is sleeved on the drive shaft 165, the Hall sensor 172 is fixed in the accommodating space of the base 140, and the magnetic element 171 is fixed to the connecting plate 167. The number of the magnetic elements 171 is one or more, and when the number of the magnetic elements 171 is more than one, the center of all the magnetic elements 171 as a whole is located on the drive shaft. In FIG. 19, the number of the magnetic elements 171 is 4 as an example for illustration.

The greater the number of the magnetic elements 171, the greater the intensity of the magnetic field generated by the magnetic elements 171, and the more sensitive the Hall sensor 172 senses the changes in the magnetic field generated by the magnetic elements 171, thereby improving the accuracy of measurement of the change in position between the bracket 150 and the base 140

Referring to FIGS. 12 to 14, FIG. 20 and FIG. 21 together, FIG. 20 is an exploded schematic view of a driver according to further another embodiment of the present disclosure, and FIG. 21 is a structural schematic view of an auxiliary shaft according to an embodiment of the present disclosure. The Hall sensor 172 is fixed in the accommodating space of the base 140, and the magnetic element 171 is fixed to the drive shaft 165. The driver 160 further includes an auxiliary shaft 168 connected to the drive shaft 165. The auxiliary shaft 168 is also arranged with a magnetic element 171, and the distance between the magnetic element 171 arranged on the auxiliary shaft 168 and the Hall sensor 172 remains unchanged when the drive shaft 165 rotates.

In the embodiments, with the auxiliary shaft 168 connected to the drive shaft 165 being arranged, and the magnetic element 171 being arranged on the auxiliary shaft 168, the number of the magnetic elements 171 may be increased. The greater the number of the magnetic elements 171, the greater the intensity of the magnetic field generated by the magnetic elements 171, and the more sensitive the Hall sensor 172 senses the changes in the magnetic field generated by the magnetic elements 171, thereby improving the accuracy of measurement of the change in position between the bracket 150 and the base 140. Further, the distance between the magnetic element 171 arranged on the auxiliary shaft 168 and the Hall sensor 172 remains unchanged when the drive shaft 165 rotates, the intensity of the magnetic field generated by the magnetic element 171, sensed by the Hall sensor 172, remains unchanged, and the Hall sensor 172 determines the position between the bracket 150 and the base 140 according to the change in the direction of the magnetic field generated by the magnetic element 171, thereby avoiding the technical defect of poor measurement accuracy caused by changes in the position of the Hall sensor 172 relative to the position of the magnetic element 171.

In the embodiments, the auxiliary shaft 168 may include a first shaft body 1681, a second shaft body 1682, and a third shaft body 1683. The first shaft body 1681 is connected to the drive shaft 165 and is perpendicular or substantially perpendicular to the drive shaft 165. The second shaft body 1682 is bent and connected to the first shaft body 1681. The third shaft body 1683 is bent and connected to the second shaft body 1682, and the third shaft body 1683 and the first shaft body 1681 are disposed on the same side of the second shaft body 1682. The magnetic element 171 is disposed at an end of the third shaft body 1683 away from the second shaft body 1682. It can be understood that the structure of the auxiliary shaft 168 is not limited to the structure in the embodiments, and may also be in other forms.

The following describes the circuit block view of the network device 1 of the present disclosure. Referring to FIG. 22 together, FIG. 22 is a circuit block view of a network device according to an embodiment of the present disclosure. In addition to the main controller 130, the network device 1 further includes a driver 160 and a drive controller 310. The main controller 130 is electrically connected to the drive controller 310, and the drive controller 310 is also electrically connected to the driver 160. The main controller 130 is configured to send a first control signal. The drive controller 310 receives the first control signal, and drives the driver 160 to rotate according to the first control signal. The rotation of the driver 160 drives the bracket to rotate, and the Hall sensor 172 senses a rotation angle of the driver 160 in response to the first control signal to obtain a detection angle. The main controller 130 is configured to compare the detection angle with a target angle, and when the detection angle is not equal to the target angle, the main controller 130 sends a second control signal. The drive controller 310 receives the second control signal and drives the driver 160 to rotate according to the second control signal. When the main controller 130 determines that the rotation angle of the driver 160 is equal to the target angle, the main controller 130 controls the driver 160 to stop.

For example, when the driver 160 is required to rotate by a target angle, for example, the driver 160 is required to rotate clockwise by 10°, the main controller 130 sends a first control signal, and the drive controller 310 receives the first control signal to drive the driver 160 to rotate according to the first control signal. When there is no rotation error when the driver 160 rotates, the driver 160 rotates clockwise by 10°. However, due to the rotation error of the driver 160 during the rotation, the rotation angle of the driver 160 may be less than the preset angle (for example, 9.5°), or may be greater than the preset angle (for example, 10.6°). The Hall sensor 172 senses the rotation angle of the driver 160 in response to the first control signal to obtain a detection angle, and sends the detection angle to the main controller 130. The main controller 130 compares the detection angle with the target angle, and when the detection angle is equal to the target angle, it is indicated that the driver 160 is rotated into position. When the detection angle is not equal to the target angle, for example, when the Hall sensor 172 detects that the driver 160 has rotated 10.6 degrees according to the first control signal, the main controller 130 sends a second control signal. The drive controller 310 receives the second control signal and drives the driver 160 to rotate counterclockwise according to the second control signal. The Hall sensor 172 detects the rotation angle of the driver 160 in real time. When the main controller 130 determines that the rotation angle of the driver 160 is equal to 10° (that is, it rotates by 0.6° counterclockwise on the basis of 10.6° clockwise), the main controller 130 controls the driver 160 to stop.

The network device 1 provided in the embodiments is arranged with the Hall sensor 172 to detect the rotation angle of the driver 160. The main controller 130 determines whether there is a rotation error according to the detected angle and the target angle, and makes correction in time when the rotation error occurs, ensuring the accuracy when the driver 160 rotates to the target angle.

In some embodiments, the step angle when the drive controller 310 drives the driver 160 to rotate according to the first control signal is a first step angle, and the step angle when the drive controller 310 drives the driver 160 to rotate according to the second control signa is a second step angle, wherein the first step angle is greater than the second step angle. For example, the first step angle is 1°, and the second step angle is 0.8°. When the driver 160 rotates with a greater step angle (first step angle) rotation, the driver 160 can quickly turn to the vicinity of the target angle. Further, the use of a less step angle (second step angle) in the event of an error between the detection angle and the target angle allows the driver 160 to rotate precisely to the target angle.

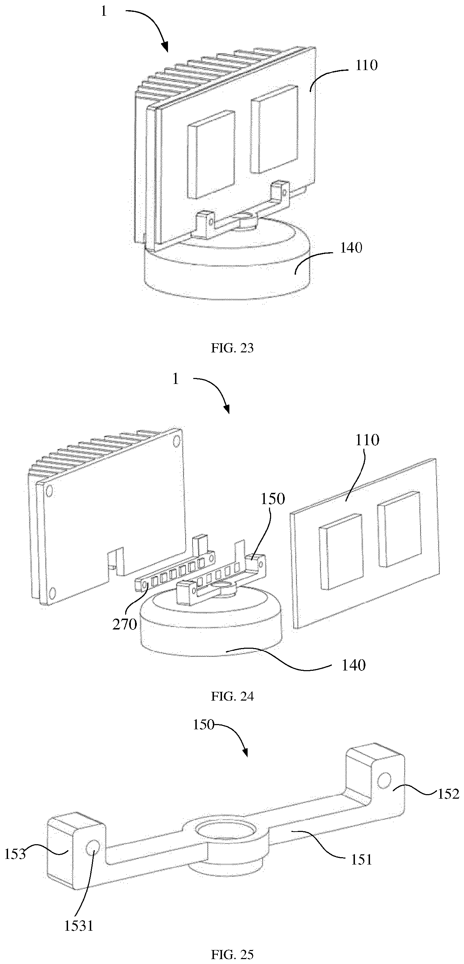

Referring to FIG. 23, FIG. 24, and FIG. 25 in conjunction with FIG. 6 and FIG. 7, FIG. 23 is a three-dimensional structural schematic view of a network device according to further another embodiment of the present disclosure, FIG. 24 is an exploded schematic view of the network device shown in FIG. 23, and FIG. 25 is a structural schematic view of a bracket according to an embodiment of the present disclosure. In the embodiments, the network device 1 further includes an auxiliary bracket 270. The auxiliary bracket 270 may be combined with the network device 1 provided in any of the foregoing embodiments.

The auxiliary bracket 270 is fixed to the bracket 150. The auxiliary bracket 270 is configured to assist the bracket 150 to fix the first signal receiving antenna 110 such that the first signal receiving antenna 110 is more firmly fixed to the bracket 150.

Specifically, in the embodiments, the bracket 150 includes a bracket body 151, a first extension portion 152, and a second extension portion 153. The first extension 152 is bent and connected to an end of the bracket body 151, and the second extension 153 is bent and connected to the other end of the bracket body 151. The second extension 153 and the first extension portion 152 are disposed on the same side of the bracket body 151 and both face away from the base 140. The circuit board 180 is respectively fixed to the first extension portion 152 and the second extension portion 153 by a fixing member. The first signal receiving antenna 110 is arranged on a side of the circuit board 180 facing away from the base 140.

The first extension portion 152 and the second extension portion 153 are each arranged with a positioning member 1531, and the fixing member and the corresponding positioning member 1531 cooperate to fix the first signal receiving antenna 110 to the first extension portion 152 and the second extension portion 153, respectively. In the embodiments, the positioning member 1531 is a positioning hole, and an inner wall of the positioning hole is arranged with a thread; the fixing member is a screw, and the circuit board 180 defines a through hole. During the assembling process, the through hole is aligned with the positioning hole, and the screw is passed through the through hole and the positioning hole in sequence to fix the circuit board 180 to the first extension portion 152 and the second extension portion 153 of the bracket 150. Understandably, in other embodiments, the positioning member 1531 is a screw rod, and the length of the screw rod is generally greater than the thickness of the circuit board 180; the fixing member is a screw cap, and the circuit board 180 defines a through hole. During the assembling process, the through hole of the circuit board 180 is aligned with the screw rod and sleeved on the screw rod, and the screw cap is sleeved on the screw rod, such that the circuit board 180 is fixed to the first extension portion 152 and the second extension portion 153 of the bracket 150. The manner in which the circuit board 180 is fixed to the first extension portion 152 and the second extension portion 153 is not limited to the two embodiments described above, as long as it satisfies the requirement of fixing the circuit board 180 to the bracket 150.

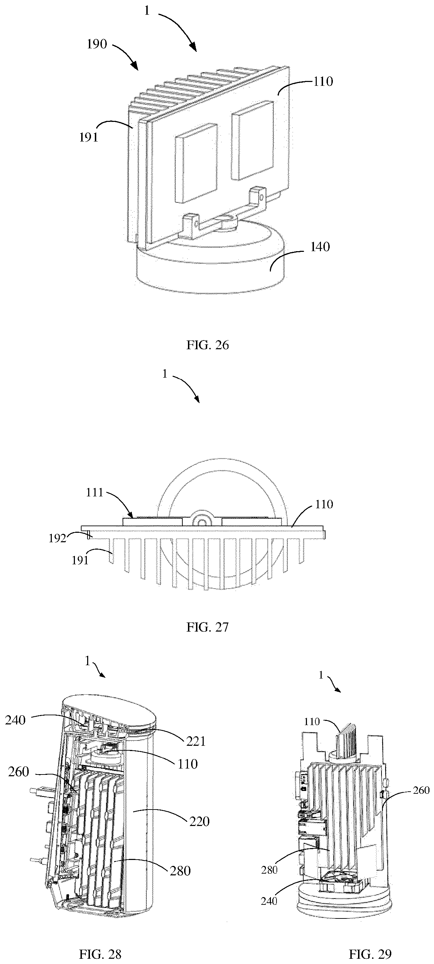

Referring to FIG. 26 and FIG. 27, FIG. 26 is a structural schematic view of a network device according to further another embodiment of the present disclosure, and FIG. 27 is a top view of FIG. 26. The network device 1 further includes a heat dissipation member 190. The network device 1 including the heat dissipation member 190 may be integrated into the network device 1 provided in any of the foregoing embodiments. The first signal receiving antenna 110 includes a receiving surface 111 for receiving the first network signal. The heat dissipation member 190 may be directly or indirectly disposed on a surface of the first signal receiving antenna 110 away from the receiving surface 111.

The material of the heat dissipation member 190 may be, but is not limited to, a metal with good thermal conductivity. The heat dissipation member 190 is configured to dissipate heat when the first signal receiving antenna 110 is in operation, so as to avoid unstable performance of the first signal receiving antenna 110 caused by overheating of the first signal receiving antenna 110 during operation. In the embodiments, the heat dissipation member 190 further includes a plurality of heat dissipation fins 191 arranged at intervals to improve the heat dissipation effect. Further, the size of the heat dissipation fin 191 adjacent to a rotation axis of the first signal receiving antenna 110 is larger than the size of the heat dissipation fin 191 away from the rotation axis.

Since there is a gap between the two ends of the first signal receiving antenna 110 and the housing 220 of the network device 1, the ends of the first signal receiving antenna 110 are easier to dissipate heat compared to parts of the first signal receiving antenna 110 near the rotation axis. In the network device 1 of the present disclosure, the size of the heat dissipation fin 191 adjacent to the rotation axis of the first signal receiving antenna 110 is set to be larger than the size of the heat dissipation fin 191 far away from the rotation axis. Therefore, the uniformity of the heat dissipation effect in various parts of the first signal receiving antenna 110 may be improved.

Further, in some embodiments, in directions from the ends of the first signal receiving antenna 110 to the rotation axis, the lengths of the heat dissipation fins 191 increase in sequence. The arrangement of the heat dissipation fins 191 may improve the uniformity of the heat dissipation effect of each part of the first signal receiving antenna 110, and additionally, when the first signal receiving antenna 110 rotates, the heat dissipation fins 191 are not easy to touch other parts in the network device 1.

Furthermore, the heat dissipation element 190 further includes a heat dissipation body 192 attached to the surface of the first signal receiving antenna 110 away from the receiving surface 111. The plurality of heat dissipation fins 191 are disposed on a surface of the heat dissipation body 192 away from the receiving surface 111. The shape of the heat dissipation body 192 may be, but is not limited to, a rectangle.

When the heat dissipation member 190 further includes the heat dissipation body 192, the contact area between the heat dissipation body 192 and the first signal receiving antenna 110 is relatively large, thereby allowing the heat of the first signal receiving antenna 110 to be quickly exported.

Referring to FIG. 28, FIG. 28 is a structural schematic view of a network device according to further another embodiment of the present disclosure. In the embodiments, the network device 1 further includes a fan 240. The network device 1 including the fan 240 may be integrated into the network device 1 provided in any of the foregoing embodiments. In the embodiments, the network device 1 is illustrated in terms of the network device 1 including the fan 240 in combination with the view shown in FIG. 2. The fan 240 is arranged facing the first signal receiving antenna 110 for heat dissipation. The fan 240 is configured to accelerate the air circulation near the first signal receiving antenna 110 to further improve the heat dissipation effect.

Further, the housing 220 of the network device 1 defines a heat dissipation hole 221. The heat dissipation hole 221 communicates with the accommodating space defined by the housing 220. When the fan 240 rotates, air in the housing 220 is driven to interact with air outside the housing 220 through the heat dissipation hole 221 to achieve heat dissipation.

In some embodiments, the network device 1 further includes a circuit board 260 arranged on a lower part of the network device 1 to provide guarantee for the operation of the network device 1. The circuit board 260 is also called a large board.

In some embodiments, the network device 1 further includes a heat dissipation plate 280 disposed adjacent to the circuit board 260 for heat dissipation.

Referring to FIG. 29, FIG. 29 is a structural schematic view of a network device, with a housing removed, according to further another embodiment of the present disclosure. In the embodiments, the network device 1 further includes a fan 240. The network device 1 including the fan 240 may be integrated into the network device 1 provided in any of the implementation manners involved in FIGS. 1 to 16.

The fan 240 is arranged on a bottom of the network device 1. When the fan 240 rotates, the air in the housing 220 can interact with the air outside the housing 220 to achieve heat dissipation.

In some embodiments, the network device 1 further includes a circuit board 260 arranged on the lower part of the network device 1 to provide guarantee for the operation of the network device 1. The circuit board 260 is also called a large board.

In some embodiments, the network device 1 further includes a heat dissipation plate 280 disposed adjacent to the circuit board 260 for heat dissipation.

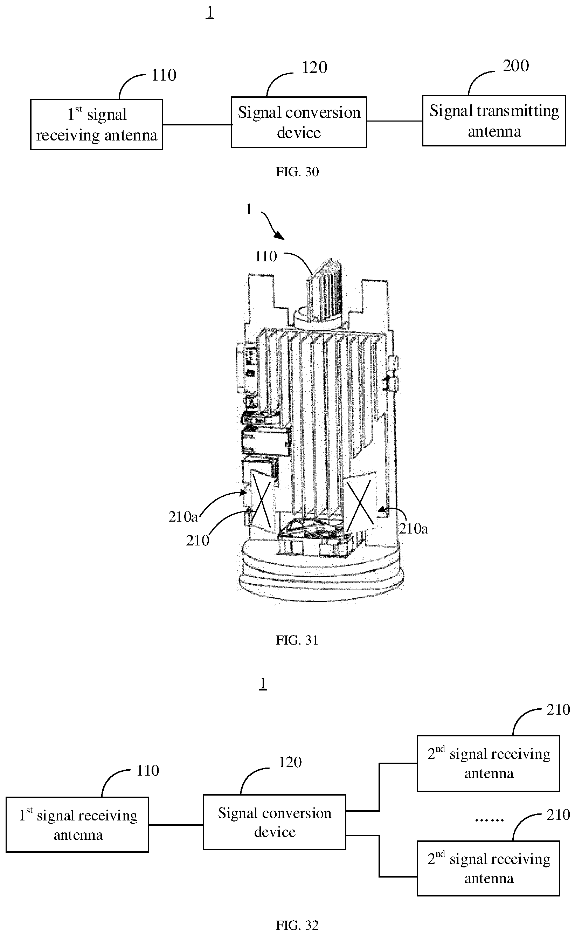

Referring to FIG. 30, FIG. 30 is a circuit block view of a network device according to further another embodiment of the present disclosure. The network device 1 further includes a signal transmitting antenna 200. The signal transmitting antenna 200 is electrically connected to the signal conversion device 120 to radiate the second network signal.
In a case that the second network signal is a Wi-Fi signal, the signal transmitting antenna 200 is a Wi-Fi antenna.

Referring to FIG. 2, FIG. 31 and FIG. 32 together, FIG. 31 is a structural schematic view of a network device according to further another embodiment of the present disclosure, and FIG. 32 is a circuit block view of a network device according to further another embodiment of the present disclosure. In the embodiments, for convenience of illustration, the housing 220 in the network device 1 is omitted, and the network device 1 further includes a plurality of second signal receiving antennas 210. The plurality of second signal receiving antennas 210 are configured to receive a third network signal, and the signal conversion device 120 is further configured to convert the third network signal into a fourth network signal. Compared with the second signal receiving antenna 210, the first signal receiving antenna 110 is arranged on a top of the network device 1, and the plurality of second signal receiving antennas 210 are distributed along a periphery of the network device 1. The network device 1 may include, but is not limited to, eight second signal receiving antennas 210.

Due to the uncertainty of the position of the base station 3 transmitting the third network signal, the direction of the third network signal transmission also has uncertainty. While the positions of the plurality of second signal receiving antennas 210 are fixed and cannot be rotated. In the present disclosure, by distributing the second signal receiving antennas 210 along the periphery of the network device 1, the third network signals in multiple directions can be detected. Furthermore, the accuracy of determining the third network signal with the strongest signal intensity according to the signal intensity of each collected third network signal may be improved.

The second signal receiving antenna 210 may be, but not limited to, a sub-6G signal receiving antenna. Accordingly, the third network signal may be, but not limited to, a sub-6G signal, and the fourth network signal may be, but not limited to a Wi-Fi signal.

The network device 1 further includes the housing 220. The plurality of second signal receiving antennas 210 being distributed along the periphery of the network device 1 includes, but not limited to, that the plurality of second signal receiving antennas 210 are directly or indirectly attached on the housing 220; or, the second signal receiving antennas 210 are disposed in the housing 220 of the network device 1, and the second signal receiving antennas 210 are not in contact with the housing 220.

The shape of the housing 220 may be a multi-faceted cylindrical tube or a cylindrical tube, which will not be repeated herein. The first signal receiving antenna 110, the signal conversion device 120, the main controller 130, the main controller 130, the plurality of second signal receiving antennas 210 and other components may all be arranged in the accommodating space formed by the housing 220. The material of the housing 220 may be, but is not limited to, an insulating material such as plastic.

In some embodiments, the signal conversion device 120 is configured to convert at least one third network signals with the strongest signal intensity among the third network signals detected by the plurality of second signal receiving antennas 210 into fourth network signals.

For example, the number of the second signal receiving antenna 210 is M, and the signal conversion device 120 is configured to select one or N second signal receiving antennas 210 from the M second signal receiving antennas 210 depending on the intensity of a corresponding third network signal received by each second signal receiving antenna 210. When the number of the selected second signal receiving antenna 210 is one, the intensity of the third network signal received by the selected second signal receiving antenna 210 is greater than the intensity of the third network signal received by each of the remaining second signal receiving antennas 210 individually. When the number of the selected second signal receiving antennas 210 is N, the sum of the intensities of the third network signals received by the selected N second signal receiving antennas 210 is greater than a sum of the intensities of the third network signals received by any remaining N second signal receiving antennas 210 of the M second signal receiving antennas 210. M and N are both positive integers. For example, M is equal to but not limited to 8, and N is equal to but not limited to 4.

In some embodiments, two second signal receiving antennas 210 may form an antenna group 210a, which are arranged on the same substrate. A polarization direction of one of the two second signal receiving antennas 210 in the same antenna group 210a is a first polarization direction, and a polarization direction of the other of the two second signal receiving antennas 210 in the same antenna group 210a is a second polarization direction, where the first polarization direction and the second polarization direction are ±45° polarization directions, respectively.

During the propagation process of the third network signal transmitted by the base station 3 to the network device 1, due to various reasons such as scattering, the third network signal exhibits an elliptical polarization. Generally, the second signal receiving antennas 210 in one polarization direction cannot receive all the energy of the third network signal, and even the energy of the third network signal received by the second signal receiving antennas 210 in a certain polarization direction is very small. In the present disclosure, the polarization directions of J second signal receiving antennas 210 in an antenna group 210a are different, which may enhance the probability of the third network signal of greater energy received by the J second signal receiving antennas 210 in the antenna group 210a.

In some embodiments, J=2, that is, one antenna group 210a includes two second signal receiving antennas 210, the polarization direction of one of the two second signal receiving antennas 210 in the same antenna group 210a is the first polarization direction, and the polarization direction of the other first signal receiving antenna 210 of the two second signal receiving antennas 210 in the same antenna group 210a is the second polarization direction, where the first polarization direction and the second polarization direction are respectively ±45° polarization directions.

As mentioned above, when the third network signal transmitted by the base station 3 is propagated to the network device 1, due to various reasons such as scattering, the third network signal exhibits an elliptical polarization. A single horizontally polarized or vertically polarized second signal receiving antenna 210 cannot receive all the energy. In order to receive as much energy of the third network signal as possible, two second signal receiving antennas 210 of which the polarization directions are perpendicular to each other are arranged in the antenna group 210a to receive the third network signal, thereby ensuring that the energy of the third network signal can be received in the antenna group 210a at any time. However, the third network signal of vertical polarization or horizontal line polarization will become a third network signal of elliptical polarization during the transmission process, and components of the third network signal of elliptical polarization in the vertical direction and the horizontal direction are inconsistent. If the two second signal receiving antennas 210 with linear polarizations of 0° and 90° are respectively used in the antenna group 210a, most of the third network signals will be received by one of the second signal receiving antennas 210. Therefore, in order to ensure that the two second signal receiving antennas 210 in the same antenna group 210a can be used effectively, the two second signal receiving antennas 210 in the same antenna group 210a are respectively set to ±45° polarization directions, thereby avoiding that the two second signal receiving antennas 210 in the same antenna group 210a cannot effectively receive the third network signals.

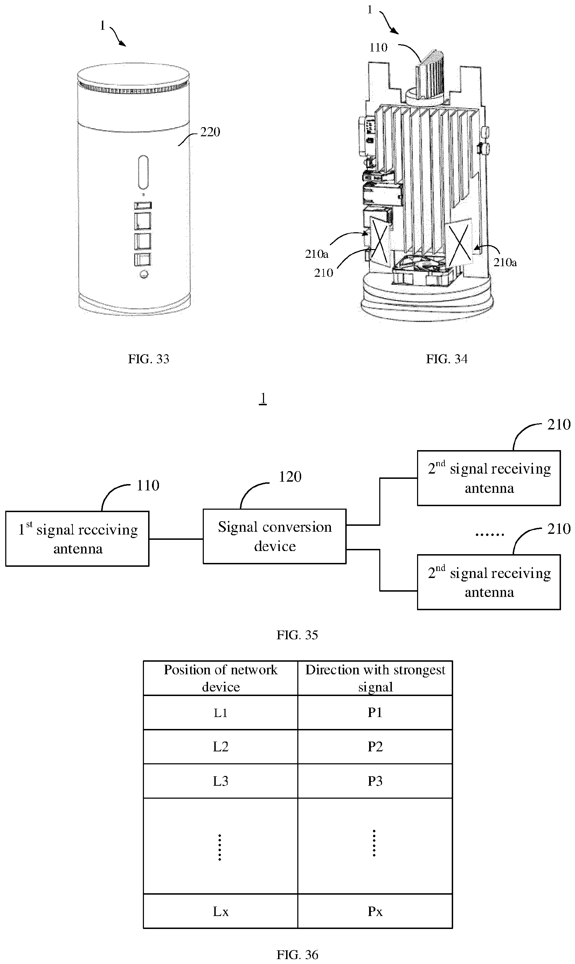

Referring to FIG. 33, FIG. 34, and FIG. 35 together, FIG. 33 is a structural schematic view of a network device according to further another embodiment of the present disclosure, FIG. 34 is a structural schematic view of the network device, with a housing removed, shown in FIG. 33, and FIG. 35 is a circuit block view of a network device according to further another embodiment of the present disclosure. The network device 1 includes a housing 220, a first signal receiving antenna 110, a plurality of second signal receiving antennas 210, and a signal conversion device 120. The housing 220 defines an accommodating space. The first signal receiving antenna 110, the second signal receiving antenna 210, and the signal conversion device 120 are all accommodated in the accommodating space. The first signal receiving antenna is rotatable relative to the housing 220 to receive a first network signal from different directions. When the first signal receiving antenna 110 is a direction where the signal intensity of the first network signal is strongest, the signal conversion device 120 converts the first network signal into a second network signal. The plurality of second signal receiving antennas 210 are fixed relative to the housing 220. The signal conversion device 120 converts at least one third network signals with the strongest signal intensity among the third network signals detected by the plurality of second signal receiving antennas 210 into fourth network signals.

For the first signal receiving antenna 110, the second signal receiving antennas 210, the first network signal, the second network signal, the third network signal, and the fourth network signal, reference may be made to the previous description, which will not be repeated herein.

In some embodiments, referring to related drawings such as FIG. 4 and FIG. 24, the network device 1 further includes a base 140, a bracket 150, a driver 160, and a main controller 130. The base 140 is fixed to the housing 220, and the bracket 150 is rotatably connected to the base 140. The bracket 150 is configured to carry the first signal receiving antenna 110, and the driver 160 is configured to drive the bracket 150 to move under the control of the main controller 130. Reference may be made to the foregoing description for the structure of the driver 160, which will not be repeated herein.

The network device 1 includes a first signal receiving antenna 110, a bracket 150, a base 140, and a signal conversion device 120. The first signal receiving antenna 110 is carried on the bracket 150, and the bracket 150 is rotatably connected to the base. 140. When the network device 1 is in an operation state, the first signal receiving antenna 110 is at a preset position relative to the base 140. When the first signal receiving antenna 110 is at the preset position relative to the base 140, the signal intensity of the first network signal received by the first signal receiving antenna 110 is greater than the signal intensity of the first network signal received when the first signal receiving antenna 110 is in another position. The signal conversion device 120 is configured to convert the first network signal with the strongest signal intensity received by the first signal receiving antenna 110 into a second network signal.

For the first signal receiving antenna 110, the bracket 150, the base 140, the signal conversion device 120, the first network signal and the second network signal, reference may be made to the foregoing description, and will not be repeated herein. In some embodiments, the network device 1 further includes a driver 160 and a main controller 130. When the first signal receiving antenna 110 receives a test instruction, the main controller 130 controls the driver 160 to drive the bracket 150 to rotate at least one revolution relative to the base 140 to obtain the signal intensities of the first network signals in all directions. The main controller 130 determines a direction where the signal intensity of the first network signal is strongest according to the signal intensities of the first network signals in all directions. The main controller 130 controls the driver 160 to drive the bracket 150 to rotate to the direction where the signal intensity of the first network signal is strongest.

The network device 1 may be in a test state or an operation state, and the test state is before the operation state. When the network device 1 is in the test state, the first signal receiving antenna 110 in the network device 1 receives the test signal and determines the direction where the signal intensity of the first network signal is strongest. After the network device 1 determines the direction where the signal intensity of the first network signal is strongest in the test state, the network device 1 enters the operation state. In other words, when the network device 1 is in the operation state, the first signal receiving antenna 110 is in a preset position relative to the base 140. At this time, the signal intensity of the first network signal received by the first signal receiving antenna 110 is greater than the signal intensity of the first network signal received when the first signal receiving antenna 110 is in another position.

Specifically, the network device 1 further includes a driver 160 and a main controller 130. When the network device 1 is in a test state, the first signal receiving antenna 110 receives a test instruction, and the main controller 130 controls the driver 160 to drive the bracket 150 to rotate at least one revolution relative to the base 140 to obtain the signal intensity of the first network signal in each direction. The main controller 130 determines a direction where the signal intensity of the first network signal is strongest according to the signal intensity of the first network signal in each direction, and the main controller 130 controls the driver 160 drives the bracket 150 to rotate to the direction where the signal intensity of the first network signal is strongest.

In some embodiments, the network device 1 may be in a test state or an operation state, and the test state is before the operation state. The network device 1 further includes a memory 230, and a comparison table is stored in the memory 230. The comparison table includes a correspondence relationship between each position of the network device 1 and the signal intensity of a corresponding first network signal. When the network device 1 is in the test state, the first signal receiving antenna 110 receives a test instruction, the main controller 130 compares the current position of the network device 1 with the comparison table, and when the current position of the network device 1 matches a certain position of the network device 1 in the comparison table, the main controller 130 controls the driver 160 to operate according to the comparison table, such that the first signal receiving antenna 110 is located in a direction where the signal intensity of the first network signal is strongest corresponding to the matched position.

For example, referring to FIG. 36, FIG. 36 is a comparison table between a position of a network device and a corresponding direction where the first network signal is strongest. The positions of the network device 1 in the comparison table are L1, L2, L3, ..., Ln. When the position of the network device 1 is L1, the direction corresponding to the strongest first network signal is P1; when the position of the network device 1 is L2, the direction corresponding to the strongest first network signal is P2; When the position of the network device 1 is L3, the direction corresponding to the strongest first network signal is P4; ...; when the position of the network device 1 is Ln, the direction corresponding to the strongest first network signal is Pn. When the network device 1 is in the test state, the current position of the network device 1 is Lx, and when the current position Lx of the network device 1 matches L3 in the comparison table, then: when the first signal receiving antenna 110 is not in the direction P3 corresponding to L3, the main controller 130 directly controls the driver 160 to drive the bracket 150 to move, thereby driving the first signal receiving antenna 110 to the direction P3; when the first signal receiving antenna 110 is disposed in the direction P3 corresponding to L3, the main controller 130 does not need to drive the driver 160 to rotate.

The network device 1 provided in the embodiments may control the operation of the driver 160 according to the current position of the network device 1 and the comparison table, and may quickly drive the first signal receiving antenna 110 to the direction where the signal intensity of the first network signal is strongest.

Although the embodiments of the present disclosure have been shown and described above, it can be understood that the above-mentioned embodiments are exemplary and should not be construed as limiting the present disclosure. Those skilled in the art may make variations, modifications, replacements and variants of the above embodiments within the scope of the present disclosure, and these improvements and embellishments are also considered to be within the scope of the present disclosure.

## Claims

1. A network device (1) comprising a base (140), a bracket (150), a functional component, a position detector (170), and a main controller (130); wherein the bracket (150) is rotatably connected to the base (140), the functional component is carried on the bracket (150), and the functional component is rotatable along with the bracket (150); the position detector (170) comprises a Hall sensor (172) and a magnetic element (171), one of the Hall sensor (172) and the magnetic element (171) being fixed to the base (140), the other of the Hall sensor (172) and the magnetic element (171) being fixed to the bracket (150) and rotatable along with the bracket (150), and a distance between the Hall sensor (172) and the magnetic element (171) remaining unchanged in a direction perpendicular to a rotation plane of the bracket (150); the Hall sensor (172) is disposed within a range of a magnetic field of the magnetic element (171); when the Hall sensor (172) rotates relative to the magnetic element (171), the Hall sensor (172) senses a change in the magnetic field of the magnetic element (171) and outputs a detection signal; the main controller (130) is configured to determine a position of the functional component relative to the base (140) according to the detection signal.

2. The network device (1) according to claim 1, wherein the base (140) defines an accommodating space (141) and a through hole (142) communicated with the accommodating space (141); the base (140) is made of an electromagnetic shielding material; the network device (1) further comprises a driver (160) configured to drive the bracket (150) to rotate relative to the base (140), the drive comprising a drive shaft (165); an end of the drive shaft (165) is received in the accommodating space (141) through the through hole (142), the other end of the drive shaft (165) is fixedly connected to the bracket (150); the drive shaft (165) is rotatably connected to the base (140); the bracket (150) is configured to carrying the functional component, the one of the Hall sensor (172) and the magnetic element (171) being fixed in the accommodating space (141) of the base (140), and the other of the Hall sensor (172) and the magnetic element (171) being fixed to the end of the drive shaft (165) received in the accommodating space (141).

3. The network device (1) according to claim 2, wherein the other of the Hall sensor (172) and the magnetic element (171) is fixed to an end surface (165a) of the drive shaft (165) away from the bracket (150).

4. The network device (1) according to claim 2, wherein an orthographic projection of a center of the magnetic element (171) on a plane where the Hall sensor (172) is located falls on a center of a region where the Hall sensor (172) is located.

5. The network device (1) according to claim 2, further comprising a circuit board (180), and the circuit board (180) is received in the accommodating space (141) and fixed to the base (140); the circuit board (180) is arranged with the main controller (130), the main controller (130) is electrically connected to the Hall sensor (172), and the magnetic element (171) is fixed to the end of the drive shaft (165) received in the accommodating space (141); the magnetic element (171) and the Hall sensor (172) are spaced apart from each other.

6. The network device (1) according to claim 5, wherein the magnetic element (171) is arranged on a side of the Hall sensor (172) away from the circuit board (180), and the drive shaft (165) is arranged on a side of the magnetic element (171) away from the Hall sensor (172).

7. The network device (1) according to claim 5, wherein the Hall sensor (172) comprises a surface (1721) facing away from the circuit board (180) and a side surface (1722) connected to the surface (1721); the magnetic element (171) is disposed adjacent to the side surface (1722), and the drive shaft (165) is disposed on a side of the magnetic element (171) facing away from the side surface (1722).

8. The network device (1) according to claim 2, wherein the driver (160) further comprises a connecting plate (167) fixed to the drive shaft (165), and the other of the Hall sensor (172) and the magnetic element (171) is fixed to the drive shaft (165) through the connecting plate (167).

9. The network device (1) according to claim 8, wherein the connecting plate (167) is sleeved on the drive shaft (165), the Hall sensor (172) is fixed in the accommodating space (141) of the base (140), and the magnetic element (171) is fixed to the connecting plate (167); the magnetic element (171) comprises at least one magnetic unit, and in condition of the number of the at least one magnetic unit being more than one, a center of the at least one magnetic unit as a whole is located on the drive shaft (165).

10. The network device (1) according to claim 2, wherein the Hall sensor (172) is fixed in the accommodating space (141) of the base (140), and the magnetic element (171) is fixed to the drive shaft (165); the driver (160) further comprises an auxiliary shaft (168) connected to the drive shaft (165); the auxiliary shaft (168) is arranged with another magnetic element (171), and a distance between the magnetic element (171) arranged on the auxiliary shaft (168) and the Hall sensor (172) remains unchanged when the drive shaft (165) rotates.

11. The network device (1) according to claim 2, wherein the driver (160) further comprises a drive motor (161) and a reducer (162), the drive motor (161) being fixed to the base (140) and rotatable under a control of a control signal submitted by the main controller (130); a step angle of the drive motor (161) is a first angle; the reducer (162) is engaged with an output shaft of the drive motor (161) and is rotatably connected to the bracket (150); the reducer (162) is configured to convert the first angle into a second angle, wherein the second angle is less than the first angle.

12. The network device (1) according to any one of claims 1-11, further comprising a driver (160) and a drive controller (310); wherein the main controller (130) is configured to send a first control signal; the drive controller (310) is configured to receive the first control signal and drive the driver (160) to rotate according to the first control signal, thereby driving the bracket (150) to rotate; the Hall sensor (172) is configured to sense a rotation angle of the driver (160) in response to the first control signal to obtain a detection angle; the main controller (130) is further configured to compare the detection angle with a target angle, and to send a second control signal in response to the detection angle being greater or less than the target angle; the drive controller (310) is further configured to receive the second control signal and drive the driver (160) to rotate according to the second control signal; the main controller (130) is further configured to control the driver (160) to stop in response to determining that the rotation angle of the driver (160) being equal to the target angle.

13. The network device (1) according to claim 12, wherein a step angle when the drive controller (310) drives the driver (160) to rotate according to the first control signal is a first step angle, and a step angle when the drive controller (310) drives the driver (160) to rotate according to the second control signa is a second step angle, the first step angle being greater than the second step angle.

14. The network device (1) according to claim 1, further comprising a driver (160) and a signal conversion device (120); wherein the functional component comprises a first signal receiving antenna (110); the driver (160) is configured to drive the bracket (150) to rotate relative to the base (140), and the first signal receiving antenna (110) is fixedly arranged on the bracket (150) and rotatable along with the bracket (150) to receive a first network signal from each of various directions; the main controller (130) is configured to send a control signal according to a current position of the bracket (150) relative to the base (140) and a position where the first network signal is strongest; the drive is configured to drive the bracket (150) to rotate relative to the base (140) under a control of the control signal, and driving the first signal receiving antenna (110) to rotate to a direction where the first network signal is strongest; the signal conversion device (120) is configured to convert the first network signal being strongest to a second network signal.

15. The network device (1) according to claim 14, further comprising a plurality of antenna groups (210a) distributed around a periphery of the network device (1), each antenna group (210a) comprising two second signal receiving antennas (210) each configured to receive a third network signal; wherein the signal conversion device (120) is further configured to convert the third network signal to a fourth network signal; all the second signal receiving antennas (210) are distributed around the periphery of the network device (1).

## Patentansprüche

1. Netzvorrichtung (1), die eine Basis (140), eine Halterung (150), eine Funktionskomponente, einen Positionsdetektor (170) und eine Hauptsteuerung (130) umfasst; wobei die Halterung (150) drehbar mit der Basis (140) verbunden ist, die Funktionskomponente an der Halterung (150) getragen wird und die Funktionskomponente zusammen mit der Halterung (150) drehbar ist; der Positionsdetektor (170) einen Hall-Sensor (172) und ein magnetisches Element (171) umfasst, wobei eines von Hall-Sensor (172) und magnetischem Element (171) an der Basis (140) befestigt ist und der/das jeweils andere von Hall-Sensor (172) und magnetischem Element (171) an der Halterung (150) befestigt und zusammen mit der Halterung (150) drehbar ist, und ein Abstand zwischen dem Hall-Sensor (172) und dem magnetischen Element (171) in einer Richtung senkrecht zu einer Rotationsebene der Halterung (150) unverändert bleibt; der Hall-Sensor (172) in einem Bereich eines Magnetfeldes des magnetischen Elements (171) angeordnet ist; wenn der Hall-Sensor (172) sich relativ zum magnetischen Element (171) dreht, erfasst der Hall-Sensor (172) eine Änderung des Magnetfeldes des magnetischen Elements (171) und gibt ein Erkennungssignal aus; die Hauptsteuerung (130) dafür ausgelegt ist, eine Position der Funktionskomponente relativ zur Basis (140) gemäß dem Erkennungssignal zu bestimmen.

2. Netzvorrichtung (1) gemäß Anspruch 1, wobei die Basis (140) einen Aufnahmeraum (141) und ein Durchgangsloch (142) definiert, das mit dem Aufnahmeraum (141) in Kommunikationsverbindung steht; die Basis (140) aus einem elektromagnetisch abschirmenden Material hergestellt ist; die Netzvorrichtung (1) ferner einen Antrieb (160) umfasst, der dafür ausgelegt ist, die Halterung (150) derart anzusteuern, dass sie sich relativ zur Basis (140) dreht, wobei der Antrieb eine Antriebswelle (165) umfasst; ein Ende der Antriebswelle (165) durch das Durchgangsloch (142) im Aufnahmeraum (141) aufgenommen wird, das andere Ende der Antriebswelle (165) fest mit der Halterung (150) verbunden ist; die Antriebswelle (165) drehbar mit der Basis (140) verbunden ist; die Halterung (150) dafür ausgelegt ist, die Funktionskomponente zu tragen, wobei der/das eine von Hall-Sensor (172) oder magnetischem Element (171) im Aufnahmeraum (141) der Basis (140) befestigt ist und der/das jeweils andere von Hall-Sensor (172) und magnetischem Element (171) an dem im Aufnahmeraum (141) aufgenommenen Ende der Antriebswelle (165) befestigt ist.

3. Netzvorrichtung (1) gemäß Anspruch 2, wobei der/das jeweils andere von Hall-Sensor (172) und magnetischem Element (171) an einer von der Halterung (150) entfernten Endfläche (165a) der Antriebswelle (165) befestigt ist.

4. Netzvorrichtung (1) gemäß Anspruch 2, wobei eine orthographische Projektion eines Mittelpunkts des magnetischen Elements (171) auf eine Ebene, in der sich der Hall-Sensor (172) befindet, auf einen Mittelpunkt eines Bereichs fällt, in dem sich der Hall-Sensor (172) befindet.

5. Netzvorrichtung (1) gemäß Anspruch 2, ferner eine Leiterplatte (180) umfassend, und wobei die Leiterplatte (180) im Aufnahmeraum (141) aufgenommen und an der Basis (140) befestigt ist; die Leiterplatte (180) mit der Hauptsteuerung (130) angeordnet ist, die Hauptsteuerung (130) elektrisch mit dem Hall-Sensor (172) verbunden ist und das magnetische Element (171) am Ende der in dem Aufnahmeraum (141) aufgenommenen Antriebswelle (165) befestigt ist; das magnetische Element (171) und der Hall-Sensor (172) voneinander beabstandet sind.

6. Netzvorrichtung (1) gemäß Anspruch 5, wobei das magnetische Element (171) auf einer von der Leiterplatte (180) abgewandten Seite des Hall-Sensors (172) angeordnet ist und die Antriebswelle (165) auf einer vom Hall-Sensor (172) abgewandten Seite des magnetischen Elements (171) angeordnet ist.

7. Netzvorrichtung (1) gemäß Anspruch 5, wobei der Hall-Sensor (172) eine von der Leiterplatte (180) abgewandte Oberfläche (1721) und eine mit der Oberfläche (1721) verbundene Seitenfläche (1722) umfasst; das magnetische Element (171) angrenzend an die Seitenfläche (1722) angeordnet ist und die Antriebswelle (165) auf einer von der Seitenfläche (1722) abgewandten Seite des magnetischen Elements (171) angeordnet ist.

8. Netzvorrichtung (1) gemäß Anspruch 2, wobei der Antrieb (160) ferner eine Verbindungsplatte (167) umfasst, die an der Antriebswelle (165) befestigt ist, und der/das andere von Hall-Sensor (172) und magnetischem Element (171) über die Verbindungsplatte (167) an der Antriebswelle (165) befestigt ist.

9. Netzvorrichtung (1) gemäß Anspruch 8, wobei die Verbindungsplatte (167) auf die Antriebswelle (165) gesteckt ist, der Hall-Sensor (172) im Aufnahmeraum (141) der Basis (140) befestigt ist und das magnetische Element (171) an der Verbindungsplatte (167) befestigt ist; das magnetische Element (171) wenigstens eine magnetische Einheit umfasst, und unter der Bedingung, dass die Anzahl der wenigstens einen magnetischen Einheit größer als eins ist, ein Mittelpunkt der wenigstens einen magnetischen Einheit als Ganzes auf der Antriebswelle (165) angeordnet ist.

10. Netzvorrichtung (1) gemäß Anspruch 2, wobei der Hall-Sensor (172) im Aufnahmeraum (141) der Basis (140) befestigt ist und das magnetische Element (171) an der Antriebswelle (165) befestigt ist; der Antrieb (160) ferner eine Hilfswelle (168) umfasst, die mit der Antriebswelle (165) verbunden ist; die Hilfswelle (168) mit einem anderen magnetischen Element (171) angeordnet ist und ein Abstand zwischen dem auf der Hilfswelle (168) angeordneten magnetischen Element (171) und dem Hall-Sensor (172) unverändert bleibt, wenn sich die Antriebswelle (165) dreht.

11. Netzvorrichtung (1) gemäß Anspruch 2, wobei der Antrieb (160) ferner einen Antriebsmotor (161) und ein Untersetzungsgetriebe (162) umfasst, wobei der Antriebsmotor (161) an der Basis (140) befestigt und unter der Kontrolle eines von der Hauptsteuerung (130) gelieferten Steuersignals drehbar ist; ein Schrittwinkel des Antriebsmotors (161) ein erster Winkel ist; das Untersetzungsgetriebe (162) mit einer Abtriebswelle des Antriebsmotors (161) in Eingriff steht und drehbar mit der Halterung (150) verbunden ist; das Untersetzungsgetriebe (162) dafür ausgelegt ist, den ersten Winkel in einen zweiten Winkel umzuwandeln, wobei der zweite Winkel kleiner als der erste Winkel ist.

12. Netzvorrichtung (1) gemäß einem der Ansprüche 1-11, ferner einen Antrieb (160) und eine Antriebssteuerung (310) umfassend; wobei die Hauptsteuerung (130) dafür ausgelegt ist, ein erstes Steuersignal zu senden; die Antriebssteuerung (310) dafür ausgelegt ist, das erste Steuersignal zu empfangen und den Antrieb (160) gemäß dem ersten Steuersignal derart anzusteuern, dass er sich dreht, wodurch die Halterung (150) zum Drehen angesteuert wird; der Hall-Sensor (172) dafür ausgelegt ist, in Reaktion auf das erste Steuersignal einen Drehwinkel des Antriebs (160) zu erfassen, um einen Erkennungswinkel zu erhalten; die Hauptsteuerung (130) ferner dafür ausgelegt ist, den Erkennungswinkel mit einem Zielwinkel zu vergleichen und in Reaktion darauf, dass der Erkennungswinkel größer oder kleiner als der Zielwinkel ist, ein zweites Steuersignal zu senden; die Antriebssteuerung (310) ferner dafür ausgelegt ist, das zweite Steuersignal zu empfangen und den Antrieb (160) gemäß dem zweiten Steuersignal derart anzusteuern, dass er sich dreht; die Hauptsteuerung (130) ferner dafür ausgelegt ist, den Antrieb (160) in Reaktion auf das Bestimmen, dass der Drehwinkel des Antriebs (160) gleich dem Zielwinkel ist, zum Anhalten zu steuern.

13. Netzvorrichtung (1) gemäß Anspruch 12, wobei ein Schrittwinkel, wenn die Antriebssteuerung (310) den Antrieb (160) gemäß dem ersten Steuersignal zum Drehen antreibt, ein erster Schrittwinkel ist, und ein Schrittwinkel, wenn die Antriebssteuerung (310) den Antrieb (160) gemäß dem zweiten Steuersignal in Drehung versetzt, ein zweiter Schrittwinkel ist, wobei der erste Schrittwinkel größer als der zweite Schrittwinkel ist.

14. Netzvorrichtung (1) gemäß Anspruch 1, ferner einen Antrieb (160) und eine Signalumwandlungsvorrichtung (120) umfassend; wobei die Funktionskomponente eine erste Signalempfangsantenne (110) umfasst; der Antrieb (160) dafür ausgelegt ist, die Halterung (150) relativ zur Basis (140) in Drehung zu versetzen, und die erste Signalempfangsantenne (110) fest an der Halterung (150) angeordnet und zusammen mit der Halterung (150) drehbar ist, um ein erstes Netzsignal aus jeder von verschiedenen Richtungen zu empfangen; die Hauptsteuerung (130) dafür ausgelegt ist, ein Steuersignal gemäß einer aktuellen Position der Halterung (150) relativ zur Basis (140) und einer Position, an der das erste Netzsignal am stärksten ist, zu senden; der Antrieb dafür ausgelegt ist, die Halterung (150) unter der Kontrolle des Steuersignals relativ zur Basis (140) in Drehung zu versetzen und die erste Signalempfangsantenne (110) derart anzusteuern, dass sie sich in eine Richtung dreht, in der das erste Netzsignal am stärksten ist; die Signalumwandlungsvorrichtung (120) dafür ausgelegt ist, das erste Netzsignal, das am stärksten ist, in ein zweites Netzsignal umzuwandeln.

15. Netzvorrichtung (1) gemäß Anspruch 14, ferner mehrere Antennengruppen (210a) umfassend, die um einen Umfang der Netzvorrichtung (1) verteilt sind, wobei jede Antennengruppe (210a) zwei zweite Signalempfangsantennen (210) umfasst, die jeweils dafür ausgelegt sind, ein drittes Netzsignal zu empfangen; wobei die Signalumwandlungsvorrichtung (120) ferner dafür ausgelegt ist, das dritte Netzsignal in ein viertes Netzsignal umzuwandeln; alle zweiten Signalempfangsantennen (210) rund um den Umfang der Netzvorrichtung (1) verteilt sind.

## Revendications

1. Dispositif (1) de réseau comportant une base (140), un support (150), un composant fonctionnel, un détecteur (170) de position, et une commande principale (130) ; le support (150) étant en liaison pivot avec la base (140), le composant fonctionnel étant porté sur le support (150), et le composant fonctionnel pouvant tourner conjointement avec le support (150) ; le détecteur (170) de position comportant un capteur (172) à effet Hall et un élément magnétique (171), un constituant parmi le capteur (172) à effet Hall et l'élément magnétique (171) étant fixé à la base (140), l'autre constituant parmi le capteur (172) à effet Hall et l'élément magnétique (171) étant fixé au support (150) et pouvant tourner conjointement avec le support (150), et une distance entre le capteur (172) à effet Hall et l'élément magnétique (171) restant inchangée dans une direction perpendiculaire à un plan de rotation du support (150) ; le capteur (172) à effet Hall étant disposé à la portée d'un champ magnétique de l'élément magnétique (171) ; lorsque le capteur (172) à effet Hall pivote par rapport à l'élément magnétique (171), le capteur (172) à effet Hall détectant une variation du champ magnétique de l'élément magnétique (171) et délivrant un signal de détection ; la commande principale (130) étant configurée pour déterminer une position du composant fonctionnel par rapport à la base (140) selon le signal de détection.

2. Dispositif (1) de réseau selon la revendication 1, la base (140) définissant un espace (141) de logement et un trou débouchant (142) mis en communication avec l'espace (141) de logement ; la base (140) étant constituée d'un matériau de blindage électromagnétique ; le dispositif (1) de réseau comportant en outre un moyen (160) d'entraînement configuré pour entraîner le support (150) en rotation par rapport à la base (140), l'entraînement comportant un arbre (165) d'entraînement ; une extrémité de l'arbre (165) d'entraînement étant reçue dans l'espace (141) de logement à travers le trou débouchant (142), l'autre extrémité de l'arbre (165) d'entraînement étant en liaison complète avec le support (150) ; l'arbre (165) d'entraînement étant en liaison pivot avec la base (140) ; le support (150) étant configuré pour porter le composant fonctionnel, le constituant considéré parmi le capteur (172) à effet Hall et l'élément magnétique (171) étant fixé dans l'espace (141) de logement de la base (140), et l'autre constituant parmi le capteur (172) à effet Hall et l'élément magnétique (171) étant fixé à l'extrémité de l'arbre (165) d'entraînement reçue dans l'espace (141) de logement.

3. Dispositif (1) de réseau selon la revendication 2, l'autre constituant parmi le capteur (172) à effet Hall et l'élément magnétique (171) étant fixé à une surface (165a) d'extrémité de l'arbre (165) d'entraînement éloignée du support (150).

4. Dispositif (1) de réseau selon la revendication 2, une projection orthographique d'un centre de l'élément magnétique (171) sur un plan où est situé le capteur (172) à effet Hall se trouvant sur un centre d'une région où est situé le capteur (172) à effet Hall.

5. Dispositif (1) de réseau selon la revendication 2, comportant en outre une carte (180) à circuit, et la carte (180) à circuit étant reçue dans l'espace (141) de logement et fixée à la base (140) ; la carte (180) à circuit étant placée avec la commande principale (130), la commande principale (130) étant reliée électriquement au capteur (172) à effet Hall, et l'élément magnétique (171) étant fixé à l'extrémité de l'arbre (165) d'entraînement reçue dans l'espace (141) de logement ; l'élément magnétique (171) et le capteur (172) à effet Hall étant espacés l'un par rapport à l'autre.

6. Dispositif (1) de réseau selon la revendication 5, l'élément magnétique (171) étant agencé d'un côté du capteur (172) à effet Hall éloigné de la carte (180) à circuit, et l'arbre (165) d'entraînement étant agencé d'un côté de l'élément magnétique (171) éloigné du capteur (172) à effet Hall.

7. Dispositif (1) de réseau selon la revendication 5, le capteur (172) à effet Hall comportant une surface (1721) orientée à l'opposé de la carte (180) à circuit et une surface latérale (1722) raccordée à la surface (1721) ; l'élément magnétique (171) étant disposé de façon adjacente à la surface latérale (1722), et l'arbre (165) d'entraînement étant disposé d'un côté de l'élément magnétique (171) orienté à l'opposé de la surface latérale (1722).

8. Dispositif (1) de réseau selon la revendication 2, le moyen (160) d'entraînement comportant en outre une plaque (167) de liaison fixée à l'arbre (165) d'entraînement, et l'autre constituant parmi le capteur (172) à effet Hall et l'élément magnétique (171) étant fixé à l'arbre (165) d'entraînement par l'intermédiaire de la plaque (167) de liaison.

9. Dispositif (1) de réseau selon la revendication 8, la plaque (167) de liaison étant emmanchée sur l'arbre (165) d'entraînement, le capteur (172) à effet Hall étant fixé dans l'espace (141) de logement de la base (140), et l'élément magnétique (171) étant fixé à la plaque (167) de liaison ; l'élément magnétique (171) comportant au moins une unité magnétique, et dans une situation où le nombre de l'unité ou des unités magnétiques est supérieur à un, un centre de l'unité ou des unités magnétiques dans leur ensemble étant situé sur l'arbre (165) d'entraînement.

10. Dispositif (1) de réseau selon la revendication 2, le capteur (172) à effet Hall étant fixé dans l'espace (141) de logement de la base (140), et l'élément magnétique (171) étant fixé à l'arbre (165) d'entraînement ; le moyen (160) d'entraînement comportant en outre un arbre auxiliaire (168) lié à l'arbre (165) d'entraînement ; l'arbre auxiliaire (168) étant agencé avec un autre élément magnétique (171), et une distance entre l'élément magnétique (171) agencé sur l'arbre auxiliaire (168) et le capteur (172) à effet Hall restant inchangée lorsque l'arbre (165) d'entraînement pivote.

11. Dispositif (1) de réseau selon la revendication 2 ; le moyen (160) d'entraînement comportant en outre un moteur (161) d'entraînement et un réducteur (162), le moteur (161) d'entraînement étant fixé à la base (140) et pouvant tourner sous le contrôle d'un signal de commande soumis par la commande principale (130) ; un angle de pas du moteur (161) d'entraînement étant un premier angle ; le réducteur (162) étant en prise avec un arbre de sortie du moteur (161) d'entraînement et étant en liaison pivot avec le support (150) ; le réducteur (162) étant configuré pour convertir le premier angle en un deuxième angle, le deuxième angle étant inférieur au premier angle.

12. Dispositif (1) de réseau selon l'une quelconque des revendications 1 à 11, comportant en outre un moyen (160) d'entraînement et une commande (310) d'entraînement ; la commande principale (130) étant configurée pour émettre un premier signal de commande ; la commande (310) d'entraînement étant configurée pour recevoir le premier signal de commande et actionner le moyen (160) d'entraînement en rotation selon le premier signal de commande, entraînant ainsi le support (150) en rotation ; le capteur (172) à effet Hall étant configuré pour détecter un angle de rotation du moyen (160) d'entraînement en réponse au premier signal de commande pour obtenir un angle de détection ; la commande principale (130) étant en outre configurée pour comparer l'angle de détection à un angle cible, et pour émettre un deuxième signal de commande en réponse au fait que l'angle de détection soit supérieur ou inférieur à l'angle cible ; la commande (310) d'entraînement étant en outre configurée pour recevoir le deuxième signal de commande et actionner le moyen (160) d'entraînement en rotation selon le deuxième signal de commande ; la commande principale (130) étant en outre configurée pour commander le moyen (160) d'entraînement pour qu'il s'arrête en réponse à la détermination du fait que l'angle de rotation du moyen (160) d'entraînement soit égal à l'angle cible.

13. Dispositif (1) de réseau selon la revendication 12 ; un angle de pas lorsque la commande (310) d'entraînement actionne le moyen (160) d'entraînement en rotation selon le premier signal de commande étant un premier angle de pas, et un angle de pas lorsque la commande (310) d'entraînement actionne le moyen (160) d'entraînement en rotation selon le deuxième signal de commande étant un deuxième angle de pas, le premier angle de pas étant supérieur au deuxième angle de pas.

14. Dispositif (1) de réseau selon la revendication 1, comportant en outre un moyen (160) d'entraînement et un dispositif (120) de conversion de signal ; le composant fonctionnel comportant une première antenne (110) de réception de signaux ; le moyen (160) d'entraînement étant configuré pour actionner le support (150) en rotation par rapport à la base (140), et la première antenne (110) de réception de signaux étant agencé de manière fixe sur le support (150) et pouvant tourner conjointement avec le support (150) pour recevoir un premier signal de réseau provenant de chaque direction parmi diverses directions ; la commande principale (130) étant configurée pour émettre un signal de commande en fonction d'une position actuelle du support (150) par rapport à la base (140) et d'une position où le premier signal de réseau est le plus fort ; l'entraînement étant configuré pour actionner le support (150) en rotation par rapport à la base (140) sous le contrôle du signal de commande, et actionner la première antenne (110) de réception de signaux en rotation jusqu'à une direction où le premier signal de réseau est le plus fort ; le dispositif (120) de conversion de signal étant configuré pour convertir le premier signal de réseau qui est le plus fort en un deuxième signal de réseau.

15. Dispositif (1) de réseau selon la revendication 14 ; comportant en outre une pluralité de groupes (210a) d'antennes répartis autour d'une périphérie du dispositif (1) de réseau, chaque groupe (210a) d'antennes comportant deux deuxièmes antennes (210) de réception de signaux dont chacune est configurée pour recevoir un troisième signal de réseau ; le dispositif (120) de conversion de signal étant en outre configuré pour convertir le troisième signal de réseau en un quatrième signal de réseau ; toutes les deuxièmes antennes (210) de réception de signaux étant réparties autour de la périphérie du dispositif (1) de réseau.
